# EUROPEAN PATENT APPLICATION

(11) **EP 4 564 885 A1**
(43) Date of publication of application: **04.06.2025**
(21) Application number: 23851525.8
(22) Date of filing: 11.07.2023
(51) Int. Cl.: H04W 24/02

(54) **COMMUNICATION METHOD AND COMMUNICATION APPARATUS**

(30) Priority: 08.08.2022 CN 202210945163
(71) Applicant: Huawei Technologies Co., Ltd., Shenzhen, Guangdong 518129 (CN)
(72) Inventor: FU, Chao, Shenzhen, Guangdong 518129 (CN); XIE, Xi, Shenzhen, Guangdong 518129 (CN); KONG, Lingshuai, Shenzhen, Guangdong 518129 (CN); CHEN, Jun, Shenzhen, Guangdong 518129 (CN)
(74) Representative: Maiwald GmbH
(86) International application number: PCT/CN2023/106756
(87) International publication number: WO 2024/032300

(57) **Abstract**

This application provides a communication method and a communication apparatus. The method may include: A terminal device receives first measurement configuration information. The first measurement configuration information indicates to modify a first measurement object, and the first measurement object is associated with a first measurement identifier. The terminal device performs a first operation when the first measurement identifier is not associated with delay measurement. The first operation includes one or more of the following operations: The terminal device removes a reporting record corresponding to the first measurement identifier, the terminal device stops a timer corresponding to the first measurement identifier, or the terminal device resets information associated with the first measurement identifier. The delay measurement includes packet data convergence protocol data packet average delay measurement and/or packet data convergence protocol excess data packet delay measurement. The method can reduce impact of a measurement object modification procedure on delay measurement.

## Description

This application claims priority to Chinese Patent Application No. 202210945163.1, filed with the China National Intellectual Property Administration on August 8, 2022 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

A network device may provide measurement configuration information related to delay measurement for a terminal device, so that the terminal device may perform a delay measurement procedure based on the measurement configuration information, for example, perform delay measurement, and report a measurement result of the delay measurement. The measurement configuration information may include information such as a measurement object.

However, if the network device initiates a measurement object modification/removal procedure in a process in which the terminal device performs delay measurement, the delay measurement procedure of the terminal device may be affected. For example, reporting the measurement result of the delay measurement by the terminal device may be affected. The delay measurement herein may be packet data convergence protocol (packet data convergence protocol, PDCP) uplink data packet average delay measurement or PDCP data packet excess delay measurement.

Therefore, how to reduce impact of the measurement object modification/removal procedure on the delay measurement procedure of the terminal device to improve service performance of the terminal device is a problem that needs to be considered currently.

### SUMMARY

This application provides a communication method and a communication apparatus, to reduce impact of a measurement object modification/removal procedure on a delay measurement procedure of a terminal device.

According to a first aspect, a communication method is provided. The method may be performed by a terminal device, or may be performed by a chip or a circuit configured in the terminal device. This is not limited in this application. For convenience, the following uses an example in which the terminal device performs the method for description.

The method includes: The terminal device receives first measurement configuration information, where the first measurement configuration information indicates to modify a first measurement object, and the first measurement object is associated with a first measurement identifier. The terminal device performs a first operation when the first measurement identifier is not associated with delay measurement; or the terminal device performs a second operation when the first measurement identifier is associated with the delay measurement.

The first operation includes one or more of the following operations: The terminal device removes a reporting record corresponding to the first measurement identifier, the terminal device stops a timer corresponding to the first measurement identifier, or the terminal device resets information associated with the first measurement identifier; the second operation includes one or more of the following operations: The terminal device retains the reporting record corresponding to the first measurement identifier, the terminal device keeps timing of the timer, or the terminal device retains the information associated with the first measurement identifier; and the delay measurement includes packet data convergence protocol data packet average delay measurement and/or packet data convergence protocol excess data packet delay measurement.

In the foregoing solution, in a modification procedure of the first measurement object, the terminal device may determine, based on whether the first measurement identifier is associated with the delay measurement, an operation to be performed. Specifically, only when the first measurement identifier is not associated with the delay measurement, the terminal device performs the first operation, that is, resets (or deletes) information that is associated with the first measurement identifier and that is used for measurement (or used for reporting a measurement result) (that is, the reporting record and the timer corresponding to the first measurement identifier, and the information associated with the first measurement identifier), thereby reducing impact of the modification procedure of the first measurement object on the delay measurement. In other words, in another case, that is, when the first measurement identifier is associated with the delay measurement, the terminal device performs the second operation, that is, does not reset (or does not delete) information that is associated with the first measurement identifier and that is used for measurement (or used for reporting a measurement result) (that is, the reporting record and the timer corresponding to the first measurement identifier, and the information associated with the first measurement identifier). Therefore, the terminal device may continue to report the measurement result of the delay measurement based on such information, thereby improving delay measurement efficiency, saving resources, and improving service performance of the terminal device.

In a possible manner, when the first measurement identifier is associated with the delay measurement, the method further includes: The terminal device reports a measurement result of the delay measurement corresponding to the first measurement identifier to a network device based on one or more of the reporting record corresponding to the first measurement identifier, the timer corresponding to the first measurement identifier, or the information associated with the first measurement identifier.

In the foregoing solution, when the first measurement identifier is associated with the delay measurement, the terminal device does not reset (or does not delete) information that is associated with the first measurement identifier and that is used for delay measurement (or used for reporting a measurement result) (that is, the reporting record and the timer corresponding to the first measurement identifier, and the information associated with the first measurement identifier). Therefore, the terminal device may report, based on such information, the measurement result of the delay measurement associated with the first measurement identifier, and does not need to regenerate the foregoing information, thereby improving delay measurement efficiency, saving resources, and improving service performance of the terminal device.

In a possible manner, the first measurement identifier is not associated with the delay measurement, and a reporting configuration associated with the first measurement identifier does not include configuration information of the packet data convergence protocol data packet average delay measurement and/or configuration information of the packet data convergence protocol excess data packet delay measurement.

In a possible manner, the first measurement identifier is associated with the delay measurement, and a reporting configuration associated with the first measurement identifier includes configuration information of the packet data convergence protocol data packet average delay measurement and/or configuration information of the packet data convergence protocol excess data packet delay measurement.

Therefore, based on the foregoing solution, the terminal device may determine, based on whether the reporting configuration associated with the first measurement identifier includes the configuration information of the packet data convergence protocol data packet average delay measurement and/or the configuration information of the packet data convergence protocol excess data packet delay measurement, whether the first measurement identifier is associated with the delay measurement, so as to determine a to-be-performed operation based on whether the first measurement identifier is associated with the delay measurement, thereby reducing impact of the modification procedure of the first measurement object on the delay measurement.

In a possible manner, the first measurement object is one of second measurement objects, and the method further includes: The terminal device sends first capability information, where the first capability information indicates that the terminal device supports one or more of the following in a modification procedure of a second measurement object associated with the delay measurement: supporting retention of a reporting record corresponding to a second measurement identifier, supporting timing keeping of a timer corresponding to the second measurement identifier, or supporting retention of information associated with the second measurement identifier, where the second measurement identifier is associated with the second measurement object, and the second measurement identifier is associated with the delay measurement.

Based on the foregoing solution, the terminal device may report the first capability information to the network device. Because the first measurement object is one of the second measurement objects, the network device may determine, based on the first capability information, that the terminal device supports performing the second operation when the first measurement identifier is associated with the delay measurement. Therefore, the network device may determine, based on the first capability information, that the modification procedure of the first measurement object can be initiated. Because the terminal device supports performing the second operation when the first measurement identifier is associated with the delay measurement, in this case, even if the network device initiates the modification procedure of the first measurement object before the delay measurement ends, the terminal device may continue to use information associated with the first measurement identifier (for example, the reporting record and the timer corresponding to the first measurement identifier, and the information associated with the first measurement identifier) to report the measurement result of the delay measurement, thereby reducing impact of the modification procedure of the first measurement object on the delay measurement.

According to a second aspect, a communication method is provided. The method may be performed by a terminal device, or may be performed by a chip or a circuit configured in the terminal device. This is not limited in this application. For convenience, the following uses an example in which the terminal device performs the method for description.

The method includes: The terminal device obtains a first measurement result of a first cell and a second measurement result of a second cell, where the second cell is a serving cell of the terminal device, the second cell and the first cell are different cells, the first cell is associated with a first measurement object, and the second cell is associated with a second measurement object. The terminal device evaluates whether the first measurement result and the second measurement result meet a reporting criterion.

According to the foregoing solution, a resource waste caused by evaluating measurement results of a same cell and reporting the measurement results of the same cell to a network device can be avoided, and possible inappropriate handover can be avoided. For example, the terminal device initiates a cell handover procedure and is hand over from a current serving cell to the cell again.

In a possible manner, the method further includes: The terminal device reports a measurement report when the measurement result of the first cell and the measurement result of the second cell meet the reporting criterion, where the measurement report includes the first measurement result and the second measurement result.

In a possible manner, the reporting criterion is associated with the first measurement object.

In a possible manner, the first measurement result includes signal quality of the first cell, the second measurement result includes signal quality of the second cell, and the reporting criterion includes one or more of the following: a difference between the signal quality of the first cell and the signal quality of the second cell is greater than a first threshold; or the signal quality of the first cell is greater than a second threshold, and the signal quality of the second cell is less than a third threshold.

In other words, the reporting criterion may correspond to an event A3 and/or an event A5.

According to a third aspect, a communication method is provided. The method may be performed by a terminal device, or may be performed by a chip or a circuit configured in the terminal device. This is not limited in this application. For convenience, the following uses an example in which the terminal device performs the method for description.

The method includes: The terminal device receives second measurement configuration information, where the second measurement configuration information indicates to remove a first measurement object, and the first measurement object is associated with a first measurement identifier. The terminal device removes the first measurement object. The terminal device removes the first measurement identifier when the first measurement identifier is not associated with delay measurement; or the terminal device retains the first measurement identifier when the first measurement identifier is associated with the delay measurement. The delay measurement includes packet data convergence protocol data packet average delay measurement and/or packet data convergence protocol excess data packet delay measurement.

Based on the foregoing solution, in a removal procedure of the first measurement object, the terminal device may determine, based on whether the first measurement identifier is associated with the delay measurement, an operation to be performed. Specifically, the terminal device removes the first measurement identifier only when the first measurement identifier is not associated with the delay measurement; or the terminal device retains the first measurement identifier when the first measurement identifier is associated with the delay measurement.

If the terminal device removes the first measurement identifier in the removal procedure of the first measurement object, and the first measurement identifier is associated with the delay measurement, the terminal device cannot report a measurement result of the delay measurement corresponding to the first measurement identifier, and consequently, a service of the terminal device may be affected. However, in the foregoing solution, when the first measurement identifier is associated with the delay measurement, the terminal device does not remove the first measurement identifier. Therefore, the terminal device may use the first measurement identifier to report the measurement result of the delay measurement, thereby avoiding a case in which the first measurement identifier is deleted due to a measurement object removal procedure, and therefore the delay measurement result cannot be reported.

In a possible manner, when the first measurement identifier is associated with the delay measurement, the method further includes: The terminal device reports a measurement result of the delay measurement associated with the first measurement identifier.

In the foregoing solution, the terminal device may retain the first measurement identifier associated with the delay measurement in the removal procedure of the first measurement object, so that the terminal device can still report the measurement result of the delay measurement by using the first measurement identifier in the removal procedure of the first measurement object. This avoids a case in which the measurement result of the delay measurement fails to be reported due to the removal procedure of the first measurement object, thereby improving service performance of the terminal device.

In a possible manner, when the first measurement identifier is associated with the delay measurement, after the terminal device reports the measurement result of the delay measurement associated with the first measurement identifier, the method further includes: The terminal device removes the first measurement identifier.

Based on the foregoing solution, after reporting the measurement result of the delay measurement, the terminal device may delete the first measurement identifier, to reduce resource occupation caused by the first measurement identifier.

In a possible manner, the method further includes: The terminal device receives third measurement configuration information, where the third measurement configuration information indicates to remove the first measurement identifier.

In a possible manner, the first measurement identifier is not associated with the delay measurement, and a reporting configuration associated with the first measurement identifier does not include configuration information of the packet data convergence protocol data packet average delay measurement and/or configuration information of the packet data convergence protocol excess data packet delay measurement.

In a possible manner, the first measurement identifier is associated with the delay measurement, and a reporting configuration associated with the first measurement identifier includes configuration information of the packet data convergence protocol data packet average delay measurement and/or configuration information of the packet data convergence protocol excess data packet delay measurement.

In a possible manner, the first measurement object is one of second measurement objects, and the method further includes: The terminal device sends second capability information, where the second capability information indicates that in a removal procedure of a second measurement object associated with the delay measurement, the terminal device supports retention of a second measurement identifier associated with the second measurement object, and the second measurement identifier is associated with the delay measurement.

Based on the foregoing solution, the terminal device may report the second capability information to the network device. Because the first measurement object is one of the second measurement objects, the network device may determine, based on the second capability information, that the terminal device supports retention of the first measurement identifier when the first measurement identifier is associated with the delay measurement. Therefore, the network device may determine, based on the second capability information, that the removal procedure of the first measurement object can be initiated. Because the terminal device supports retention of the first measurement identifier when the first measurement identifier is associated with the delay measurement, in this case, even if the network device initiates the removal procedure of the first measurement object before the delay measurement ends, the terminal device can still use the first measurement identifier to report the measurement result of the delay measurement, thereby reducing impact of the removal procedure of the first measurement object on the delay measurement. In other words, if the network device determines that the terminal device does not support retention of the first measurement identifier associated with the delay measurement in the removal procedure of the first measurement object, the network device may not initiate (for example, not initiate before the delay measurement is completed) the removal procedure of the first measurement object, thereby avoiding a case in which the removal procedure of the first measurement object causes a failure of a delay measurement procedure.

According to a fourth aspect, a communication method is provided. The method may be performed by a terminal device, or may be performed by a chip or a circuit configured in the terminal device. This is not limited in this application. For convenience, the following uses an example in which the terminal device performs the method for description.

The method includes: The terminal device receives second measurement configuration information, where the second measurement configuration information indicates to remove a first measurement object. The terminal device removes the first measurement object and a first measurement identifier associated with the first measurement object, where the first measurement identifier is associated with delay measurement. The terminal device reports, by using a first identifier, a measurement result of the delay measurement corresponding to the first measurement identifier, where the first identifier is different from the first measurement identifier, and the delay measurement includes packet data convergence protocol data packet average delay measurement and/or packet data convergence protocol excess data packet delay measurement.

Based on the foregoing solution, in a removal procedure of the first measurement object, when the first measurement identifier associated with the delay measurement is removed, the terminal device reports, by using the first identifier different from the first measurement identifier, the measurement result of the delay measurement corresponding to the first measurement identifier. In other words, even if the first measurement identifier is removed, the terminal device may still report the measurement result of the delay measurement. This avoids impact of the removal procedure of the first measurement object on a delay measurement procedure of the terminal device, thereby improving service performance of the terminal device.

In a possible manner, the first measurement identifier is associated with the delay measurement, and a reporting configuration associated with the first measurement identifier includes configuration information of the packet data convergence protocol data packet average delay measurement and/or configuration information of the packet data convergence protocol excess data packet delay measurement.

In a possible manner, the first measurement identifier is not associated with the delay measurement, and a reporting configuration associated with the first measurement identifier does not include configuration information of the packet data convergence protocol data packet average delay measurement and/or configuration information of the packet data convergence protocol excess data packet delay measurement.

In a possible manner, that the terminal device reports, by using a first identifier, a measurement result of the delay measurement corresponding to the first measurement identifier includes: The terminal device reports the measurement result based on a reporting configuration corresponding to the first measurement identifier; or the terminal device reports the measurement result based on a preconfigured reporting configuration.

In a possible manner, the first measurement object is one of second measurement objects, and the method further includes: The terminal device sends third capability information, where the third capability information indicates that in a deletion procedure of a second measurement object associated with the delay measurement, the terminal device supports using the first identifier to report the measurement result of the delay measurement.

Based on the foregoing solution, the terminal device may report the third capability information to the network device. Because the first measurement object is one of the second measurement objects, the network device may determine, based on the third capability information, that the terminal device supports reporting, by using the first identifier, the measurement result of the delay measurement corresponding to the first measurement identifier in the removal procedure of the first measurement object when the first measurement identifier is associated with the delay measurement. Therefore, in this case, even if the network device initiates the removal procedure of the first measurement object before the delay measurement ends, and the removal procedure causes the terminal device to remove the first measurement identifier associated with the delay measurement, the terminal device may still use the first identifier to report the measurement result of the delay measurement. In other words, the removal procedure of the first measurement object initiated by the network device to the terminal device does not greatly affect the delay measurement of the terminal device. Therefore, the network device may determine, based on the second capability information, that the removal procedure of the first measurement object can be initiated. In other words, if the network device determines that the terminal device does not support reporting, by using the first identifier, the measurement result of the delay measurement corresponding to the first measurement identifier in the removal procedure of the first measurement object when the first measurement identifier is associated with the delay measurement, the network device may not initiate the removal procedure of the first measurement object before the delay measurement is completed, thereby avoiding a delay measurement procedure failure caused by the removal procedure of the first measurement object.

According to a fifth aspect, a communication method is provided. The method may be performed by a network device, or may be performed by a chip or a circuit configured in the network device. This is not limited in this application. For convenience, the following uses an example in which the network device performs the method for description.

The method includes: The network device sends first measurement configuration information, where the first measurement configuration information indicates to modify a first measurement object, and the first measurement object is associated with a first measurement identifier; and the network device receives a measurement result from a terminal device when the first measurement identifier is not associated with delay measurement, where the measurement result is reported by the terminal device based on a first operation; or the network device receives a measurement result from the terminal device when the first measurement identifier is associated with the delay measurement, where the measurement result is reported by the terminal device based on a second operation. The first operation includes one or more of the following operations: The terminal device removes a reporting record corresponding to the first measurement identifier, the terminal device stops a timer corresponding to the first measurement identifier, or the terminal device resets information associated with the first measurement identifier; the second operation includes one or more of the following operations: The terminal device retains the reporting record corresponding to the first measurement identifier, the terminal device keeps timing of the timer, or the terminal device retains the information associated with the first measurement identifier; and the delay measurement includes packet data convergence protocol data packet average delay measurement and/or packet data convergence protocol excess data packet delay measurement.

Based on the foregoing solution, in a modification procedure of the first measurement object, the network device receives, based on whether the first measurement identifier is associated with the delay measurement, measurement results reported by the terminal device by using different operations. When the first measurement identifier is associated with the delay measurement, the measurement result received by the network device is reported when the terminal device performs the second operation (that is, does not reset (or does not delete) information that is associated with the first measurement identifier and that is used for measurement (or used for reporting a measurement result) (that is, the reporting record and the timer corresponding to the first measurement identifier, and the information associated with the first measurement identifier)). In other words, when the first measurement identifier is associated with the delay measurement, the terminal device may continue to report the measurement result of the delay measurement based on the foregoing information, and does not need to regenerate the foregoing information, thereby improving delay measurement efficiency, saving resources, and improving service performance of the terminal device.

In a possible manner, the first measurement identifier is not associated with the delay measurement, and a reporting configuration associated with the first measurement identifier does not include configuration information of the packet data convergence protocol data packet average delay measurement and/or configuration information of the packet data convergence protocol excess data packet delay measurement.

In a possible manner, the first measurement object is one of second measurement objects, and the method further includes: The network device receives first capability information, where the first capability information indicates that the network device supports one or more of the following in a modification procedure of a second measurement object associated with the delay measurement: supporting retention of a reporting record corresponding to a second measurement identifier, supporting timing keeping of a timer corresponding to the second measurement identifier, or supporting retention of information associated with the second measurement identifier, where the second measurement identifier is associated with the second measurement object, and the second measurement identifier is associated with the delay measurement.

Based on the foregoing solution, the network device receives the first capability information from the terminal device. Because the first measurement object is one of the second measurement objects, the network device may determine, based on the first capability information, that the terminal device supports performing the second operation when the first measurement identifier is associated with the delay measurement. Therefore, the network device may determine, based on the first capability information, that the modification procedure of the first measurement object can be initiated. Because the terminal device supports performing the second operation when the first measurement identifier is associated with the delay measurement, in this case, even if the network device initiates the modification procedure of the first measurement object before the delay measurement ends, the terminal device may continue to use information associated with the first measurement identifier (for example, the reporting record and the timer corresponding to the first measurement identifier, and the information associated with the first measurement identifier) to report the measurement result of the delay measurement, thereby reducing impact of the modification procedure of the first measurement object on the delay measurement.

According to a sixth aspect, a communication method is provided. The method may be performed by a network device, or may be performed by a chip or a circuit configured in the network device. This is not limited in this application. For convenience, the following uses an example in which the network device performs the method for description.

The method includes: The network device sends second measurement configuration information, where the second measurement configuration information indicates to remove a first measurement object, and the first measurement object is associated with a first measurement identifier. The network device removes the first measurement identifier when the first measurement identifier is not associated with delay measurement; or the network device retains the first measurement identifier when the first measurement identifier is associated with the delay measurement. The delay measurement includes packet data convergence protocol data packet average delay measurement and/or packet data convergence protocol excess data packet delay measurement.

Based on the foregoing solution, in a removal procedure of the first measurement object, the network device may determine, based on whether the first measurement identifier is associated with the delay measurement, an operation to be performed. Specifically, the terminal device removes the first measurement identifier only when the first measurement identifier is not associated with the delay measurement; or the network device retains the first measurement identifier when the first measurement identifier is associated with the delay measurement, to avoid a case in which the first measurement identifier is deleted due to a measurement object removal procedure, and therefore the measurement result of the delay measurement cannot be identified (or obtained).

In a possible manner, when the first measurement identifier is associated with the delay measurement, the method further includes: The network device receives a measurement result of the delay measurement from the terminal device, where the measurement result is associated with the first measurement identifier.

Based on the foregoing solution, when the first measurement identifier is associated with the delay measurement, the network device may obtain the measurement result of the delay measurement by using the first measurement identifier.

In a possible manner, when the first measurement identifier is associated with the delay measurement, after the network device receives the measurement result corresponding to the delay measurement from the terminal device, the method further includes: The network device removes the first measurement identifier.

Based on the foregoing solution, the network device may remove the first measurement identifier after receiving the measurement result of the delay measurement from the terminal device, to reduce resource occupation.

In a possible manner, after the network device receives the measurement result corresponding to the delay measurement from the terminal device, the method further includes: The network device sends third measurement configuration information, where the third measurement configuration information indicates to remove the first measurement identifier.

Based on the foregoing solution, after the network device receives the measurement result of the delay measurement from the terminal device, the network device may indicate the terminal device to remove the first measurement identifier, to reduce resource occupation of the terminal device.

In a possible manner, the first measurement identifier is not associated with the delay measurement, and a reporting configuration associated with the first measurement identifier does not include configuration information of the packet data convergence protocol data packet average delay measurement and/or configuration information of the packet data convergence protocol excess data packet delay measurement.

In a possible manner, the first measurement identifier is associated with the delay measurement, and a reporting configuration associated with the first measurement identifier includes configuration information of the packet data convergence protocol data packet average delay measurement and/or configuration information of the packet data convergence protocol excess data packet delay measurement.

In a possible manner, the first measurement object is one of second measurement objects, and the method further includes: The network device receives second capability information, where the second capability information indicates that in a removal procedure of a second measurement object associated with the delay measurement, the terminal device supports retention of a second measurement identifier associated with the second measurement object, and the second measurement identifier is associated with the delay measurement.

Based on the foregoing solution, when the network device receives the second capability information, because the first measurement object is one of the second measurement objects, the network device may determine, based on the second capability information, that the terminal device supports retention of the first measurement identifier when the first measurement identifier is associated with the delay measurement. Therefore, the network device may determine, based on the second capability information, that the removal procedure of the first measurement object can be initiated.

According to a seventh aspect, a communication method is provided. The method may be performed by a network device, or may be performed by a chip or a circuit configured in the network device. This is not limited in this application. For convenience, the following uses an example in which the terminal device performs the method for description.

The method includes: The network device sends second measurement configuration information, where the second measurement configuration information indicates to remove a first measurement object, and the first measurement object is associated with a first measurement identifier; and when the first measurement identifier is associated with delay measurement, the network device receives a measurement result of the delay measurement associated with the first measurement identifier, where the delay measurement includes packet data convergence protocol data packet average delay measurement and/or packet data convergence protocol excess data packet delay measurement.

Based on the foregoing solution, even in a removal procedure of the first measurement object, the network device may still receive the measurement result (that is, a delay measurement result) corresponding to the first measurement object associated with the delay measurement. This avoids a case in which the delay measurement result cannot be reported due to the removal procedure of the first measurement object, thereby improving a success rate of delay measurement and enhancing service performance of the terminal device.

In a possible manner, the method further includes: The network device sends third measurement configuration information, where the third measurement configuration information indicates to remove the first measurement identifier.

Based on the foregoing solution, when the network device receives the delay measurement result associated with the first measurement identifier, the network device may indicate, by using the third measurement configuration information, the terminal device to remove the first measurement identifier, to reduce resource occupation caused by the first measurement identifier.

In a possible manner, the first measurement identifier is not associated with the delay measurement, and a reporting configuration associated with the first measurement identifier does not include configuration information of the packet data convergence protocol data packet average delay measurement and/or configuration information of the packet data convergence protocol excess data packet delay measurement.

In a possible manner, the first measurement object is one of second measurement objects, and the method further includes: The network device receives second capability information, where the second capability information indicates that in a removal procedure of a second measurement object associated with the delay measurement, the terminal device supports retention of a second measurement identifier associated with the second measurement object, and the second measurement identifier is associated with the delay measurement.

Based on the foregoing solution, the network device receives the second capability information from the terminal device. Because the first measurement object is one of the second measurement objects, the network device may determine, based on the second capability information, that the terminal device supports retention of the first measurement identifier in the removal procedure of the first measurement object when the first measurement identifier is associated with the delay measurement. Therefore, the network device may determine, based on the second capability information, that the removal procedure of the first measurement object can be initiated. Because the terminal device supports retention of the first measurement identifier when the first measurement identifier is associated with the delay measurement, in this case, even if the network device initiates the removal procedure of the first measurement object before the delay measurement ends, the terminal device can still use the first measurement identifier to report the measurement result of the delay measurement, thereby reducing impact of the removal procedure of the first measurement object on the delay measurement. **In** other words, if the network device determines that the terminal device does not support retention of the first measurement identifier associated with the delay measurement in the removal procedure of the first measurement object, the network device may not initiate (for example, not initiate before the delay measurement is completed) the removal procedure of the first measurement object, thereby avoiding a case in which the removal procedure of the first measurement object causes a failure of a delay measurement procedure.

According to an eighth aspect, a communication method is provided. The method may be performed by a network device, or may be performed by a chip or a circuit configured in the network device. This is not limited in this application. For convenience, the following uses an example in which the terminal device performs the method for description.

The method includes: The network device sends second measurement configuration information, where the second measurement configuration information indicates to remove a first measurement object; and the network device receives a measurement result of delay measurement corresponding to a first measurement identifier that is reported by a terminal device by using a first identifier, where the first identifier is different from the first measurement identifier, and the delay measurement includes packet data convergence protocol data packet average delay measurement and/or packet data convergence protocol excess data packet delay measurement.

Based on the foregoing solution, in a removal procedure of the first measurement object, the network device can receive the measurement result of the delay measurement corresponding to the first measurement identifier that is reported by the terminal device by using the first identifier. In other words, even if the first measurement identifier is removed in the removal procedure of the first measurement object, the terminal device can still report the measurement result of the delay measurement by using the first identifier different from the first measurement identifier. This avoids impact of the removal procedure of the first measurement object on a delay measurement procedure of the terminal device, thereby improving service performance of the terminal device.

In a possible manner, the first measurement identifier is associated with the delay measurement, and a reporting configuration associated with the first measurement identifier includes configuration information of the packet data convergence protocol data packet average delay measurement and/or configuration information of the packet data convergence protocol excess data packet delay measurement.

In a possible manner, that the network device receives a measurement result of delay measurement corresponding to a first measurement identifier that is reported by a terminal device by using a first identifier includes: The network device receives the measurement result reported by the terminal device, where the reported result is a measurement result reported by the terminal device based on a reporting configuration corresponding to the first measurement identifier; or the reported result is a measurement result reported by the terminal device based on a preconfigured reporting configuration.

In a possible manner, the first measurement object is one of second measurement objects, and the method further includes: The network device receives third capability information, where the third capability information indicates that in a deletion procedure of a second measurement object associated with the delay measurement, the terminal device supports using the first identifier to report the measurement result of the delay measurement.

Based on the foregoing solution, the network device may receive the third capability information from the terminal device. Because the first measurement object is one of the second measurement objects, the network device may determine, based on the third capability information, that the terminal device supports reporting, by using the first identifier, the measurement result of the delay measurement corresponding to the first measurement identifier in the removal procedure of the first measurement object when the first measurement identifier is associated with the delay measurement. Therefore, in this case, even if the network device initiates the removal procedure of the first measurement object before the delay measurement ends, and the removal procedure causes the terminal device to remove the first measurement identifier associated with the delay measurement, the terminal device may still use the first identifier to report the measurement result of the delay measurement. In other words, the removal procedure of the first measurement object initiated by the network device to the terminal device does not greatly affect the delay measurement of the terminal device. Therefore, the network device may determine, based on the second capability information, that the removal procedure of the first measurement object can be initiated. In other words, if the network device determines that the terminal device does not support reporting, by using the first identifier, the measurement result of the delay measurement corresponding to the first measurement identifier in the removal procedure of the first measurement object when the first measurement identifier is associated with the delay measurement, the network device may not initiate the removal procedure of the first measurement object (for example, not initiate before the delay measurement is completed), thereby avoiding a delay measurement procedure failure caused by the removal procedure of the first measurement object.

According to a ninth aspect, a communication method is provided. The method may be performed by a network device, or may be performed by a chip or a circuit configured in the network device. This is not limited in this application. For convenience, the following uses an example in which the terminal device performs the method for description.

The method includes: The network device determines that a first measurement object is associated with delay measurement, and a terminal device does not support performing a second operation in a modification procedure of the first measurement object; and the network device does not trigger the modification procedure of the first measurement object before the delay measurement is completed. The second operation includes one or more of the following operations: The terminal device retains a reporting record corresponding to a first measurement identifier, the terminal device keeps timing of a timer corresponding to the first measurement identifier, or the terminal device retains information associated with the first measurement identifier.

The first measurement identifier is associated with the first measurement object, the first measurement identifier is associated with the delay measurement, and the delay measurement includes packet data convergence protocol data packet average delay measurement and/or packet data convergence protocol excess data packet delay measurement.

Based on the foregoing solution, when the network device determines that the terminal device does not support performing the second operation for the first measurement object in the modification procedure of the first measurement object, the network device does not trigger the modification procedure of the first measurement object before determining that the delay measurement is completed, thereby avoiding that resources of the terminal device are wasted and delay measurement efficiency is reduced because the terminal device removes the reporting record corresponding to the first measurement identifier, stops the timer corresponding to the first measurement identifier, or removes the information associated with the first measurement identifier due to the modification procedure of the first measurement object.

In a possible manner, the first measurement object is one of second measurement objects, and the method further includes: The network device receives first capability information, where the first capability information indicates that the terminal device does not support one or more of the following in a modification procedure of a second measurement object associated with the delay measurement: not supporting retention of a reporting record corresponding to a second measurement identifier, not supporting timing keeping of a timer corresponding to the second measurement identifier, or not supporting retention of information associated with the second measurement identifier, where the second measurement identifier is associated with the second measurement object, and the second measurement identifier is associated with the delay measurement.

In a possible manner, the first measurement identifier is associated with the delay measurement, and a reporting configuration associated with the first measurement identifier includes configuration information of the packet data convergence protocol data packet average delay measurement and/or configuration information of the packet data convergence protocol excess data packet delay measurement.

According to a tenth aspect, a communication method is provided. The method may be performed by a network device, or may be performed by a chip or a circuit configured in the network device. This is not limited in this application. For convenience, the following uses an example in which the network device performs the method for description.

The method includes: The network device determines that a first measurement object is associated with delay measurement, and a terminal device does not support retention of a first measurement identifier associated with the first measurement object in a removal procedure of the first measurement object, or reporting a measurement result of the delay measurement by using a first identifier different from the first measurement identifier when the first measurement identifier is deleted, where the first measurement identifier is associated with the delay measurement, and the delay measurement includes packet data convergence protocol data packet average delay measurement and/or packet data convergence protocol excess data packet delay measurement. Before the delay measurement is completed, the network device does not trigger the removal procedure of the first measurement object.

Based on the foregoing solution, when the network device determines that the terminal device does not support retention of the first measurement identifier associated with the delay measurement, or reporting the measurement result of the delay measurement corresponding to the first measurement identifier by using the first identifier in the removal procedure of the first measurement object, before determining that the delay measurement is completed, the network device does not trigger the removal procedure of the first measurement object, to avoid a case in which the terminal device removes the first measurement identifier in the removal procedure of the first measurement object and the delay measurement result cannot be reported.

In a possible manner, the method further includes: The network device receives second capability information, where the second capability information indicates that the terminal device does not support retention of a second measurement identifier associated with a second measurement object in a removal procedure of the second measurement object associated with the delay measurement, and the second measurement identifier is associated with the delay measurement; or the network device receives third capability information, where the third capability information indicates that the terminal device supports using the first identifier to report the measurement result of the delay measurement in a removal procedure of the second measurement object associated with the delay measurement.

In a possible manner, the second measurement identifier is associated with the delay measurement, and a reporting configuration associated with the second measurement identifier includes configuration information of the packet data convergence protocol data packet average delay measurement and/or configuration information of the packet data convergence protocol excess data packet delay measurement.

According to an eleventh aspect, a communication apparatus is provided. The apparatus is configured to perform the method provided in the first aspect or the fourth aspect. Specifically, the apparatus may include units and/or modules configured to perform the method in any one of the possible implementations of the first aspect to the fourth aspect, for example, a processing unit and/or a communication unit.

In an implementation, the apparatus is a terminal device. When the apparatus is a terminal device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a twelfth aspect, a communication apparatus is provided. The apparatus is configured to perform the method provided in the fifth aspect or the tenth aspect. Specifically, the apparatus may include units and/or modules configured to perform the method in any one of the possible implementations of the first aspect to the tenth aspect, for example, a processing unit and/or a communication unit.

In an implementation, the apparatus is a network device. When the apparatus is a network device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is a chip, a chip system, or a circuit used in a network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a thirteenth aspect, a communication apparatus is provided. The apparatus includes at least one processor, the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the solution performed in any one of the first aspect to the tenth aspect.

In an implementation, the apparatus is a network device, or is a chip, a chip system, or a circuit used in a network device.

In another implementation, the apparatus is a terminal device, or is a chip, a chip system, or a circuit used in a terminal device.

According to a fourteenth aspect, this application provides a processor, configured to perform the methods in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fifteenth aspect, a computer-readable storage medium is provided. The computer-readable storage medium stores program code to be executed by a device, and the program code is for performing the method in any possible implementation of the first aspect to the tenth aspect.

According to a sixteenth aspect, a computer program product including instructions is provided. When the computer program product runs on a computer, the computer is enabled to perform the method in any possible implementation of the first aspect to the tenth aspect.

According to a seventeenth aspect, a chip is provided. The chip includes a processor and a communication interface. The processor reads, through the communication interface, instructions stored in a memory, to perform the method in any possible implementation of the first aspect to the tenth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method in any possible implementation of the first aspect to the tenth aspect.

### BRIEF DESCRIPTION OF DRAWINGS

FIG. 1 is a diagram of a network architecture applicable to an embodiment of this application;
FIG. 2 is an example flowchart of a communication method 200 according to an embodiment of this application;
FIG. 3 is an example flowchart of another communication method 300 according to an embodiment of this application;
FIG. 4 is an example flowchart of another communication method 400 according to an embodiment of this application;
FIG. 5 is an example flowchart of another communication method 500 according to an embodiment of this application;
FIG. 6 is a block diagram of a communication apparatus according to an embodiment of this application;
FIG. 7 is a block diagram of a communication apparatus according to another embodiment of this application; and
FIG. 8 is a block diagram of a communication apparatus according to another embodiment of this application.

### DESCRIPTION OF EMBODIMENTS

To make the objectives, technical solutions, and advantages of this application clearer, the following further describes this application in detail with reference to the accompanying drawings. Specific operation methods in method embodiments may also be applied to apparatus embodiments or system embodiments. In the descriptions of this application, unless otherwise stated, "a plurality of" means two or more.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

It may be understood that various numbers in this application are merely used for differentiation for ease of description, and are not used to limit the scope of this application. Sequence numbers of the foregoing processes do not mean a sequence of execution. The sequence of execution of the processes should be determined according to functions and internal logic of the processes.

In the specification, claims, and accompanying drawings of this application, the terms "first", "second", "third", "fourth", various other term numerals, and the like (if existent) are intended to distinguish between similar objects but do not necessarily describe a specific order or sequence. It should be understood that the data used in such a way are interchangeable in appropriate circumstances so that the embodiments described herein can be implemented in other orders than the order illustrated or described herein. In addition, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

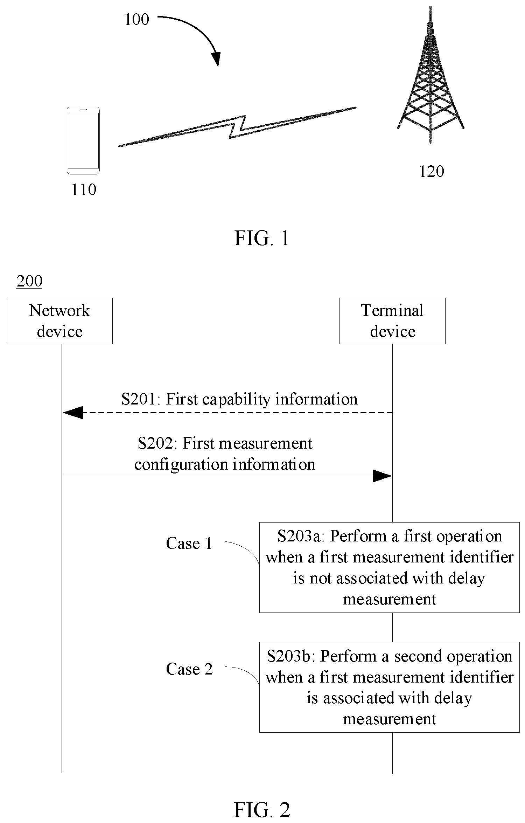

FIG. 1 is a diagram of a communication system 100 applicable to an embodiment of this application.

As shown in FIG. 1, the communication system 100 may include one network device 120, and may further include at least one terminal device 110. A connection may be established between the terminal device 110 and the network device 120 for communication.

The terminal device in embodiments of this application may be user equipment, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer with wireless sending and receiving functions, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, the terminal device may alternatively be a terminal device in an internet of things (internet of things, IoT) system. IoT is an important part of future information technology development. A main technical feature of IoT is that an article is connected to a network by using a communication technology, to implement an intelligent network of man-machine interconnection and interconnection between things. A specific form of the terminal device is not limited in this application.

It should be understood that, in embodiments of this application, the terminal device may be an apparatus configured to implement a function of the terminal device, or may be an apparatus that can support the terminal device in implementing the function, for example, a chip system. The apparatus may be mounted in the terminal. In embodiments of this application, the chip system may include a chip, or may include a chip and another discrete component.

The network device in embodiments of this application may be any device with wireless receiving and sending functions. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or home NodeB, HNB), a baseband unit (baseband unit, BBU), or an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node, for example, a baseband unit (BBU) or a distributed unit (distributed unit, DU), that forms a gNB or a transmission point.

In some deployments, the gNB may include a central unit (centralized unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that, in embodiments of this application, the network device may be an apparatus configured to implement a function of the network device, or may be an apparatus that can support the network device in implementing the function, for example, a chip system. The apparatus may be mounted in the network device.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

It should be understood that this application may be applied to an independently deployed 5G or LTE system, or may be applied to a non-independently deployed 5G or LTE system, for example, a DC scenario including evolved universal terrestrial radio access-new radio dual connectivity (evolved universal terrestrial radio access-NR dual connectivity, EN-DC) or the like, and a carrier aggregation (carrier aggregation, CA) scenario.

To facilitate understanding of technical solutions in embodiments of this application, before the solutions in embodiments of this application are described based on a 5G architecture, some terms or concepts that may be used in embodiments of this application are first described.

### 1. Measurement object (MeasObject)

A measurement object is an object measured by UE. For example, an NR measurement object configuration may include a synchronization signal and physical broadcast channel block (synchronization signal and physical broadcast channel block, SSB) configuration, a synchronization signal block measurement time configuration (SSB Measurement Time Configuration, SMTC) configuration, a channel state information reference signal (Channel State Information Reference Signal, CSI-RS) configuration, a trustlist cell (which may also be referred to as an allowlist cell), a blocklist cell (which may also be referred to as an exclude-list cell), and the like. An LTE measurement object configuration may include an E-UTRA carrier frequency, a maximum allowed measurement bandwidth, a trustlist cell (which may also be referred to as an allowlist cell), a blocklist cell (which may also be referred to as an exclude-list cell), and the like.

### 2. Reporting configuration (Reporting Configurations)

A reporting configuration includes a criterion configuration for triggering reporting of a measurement report, a format configuration of the measurement report, and the like. Each reporting configuration has an independent reporting configuration identifier (reportConfigId), and may be classified as an event-triggered reporting configuration, a periodic reporting configuration, or the like based on a type.

The event-triggered reporting configuration may include an event category, a threshold, trigger time (timeToTrigger) that meets a trigger condition, a measurement quantity that needs to be reported, a reference signal type, and the like. Measurement events include events A1 to A6, events B1 and B2, and the like.

The periodic reporting configuration may include a report interval (reportInterval), a reference signal type, a measurement quantity that needs to be reported, a reference signal type, and the like. The periodic reporting configuration may further include a PDCP packet delay measurement configuration (ul-DelayValueConfig-r16) and/or a PDCP excess delay measurement configuration (ul-ExcessDelayConfig-r17).

### 3. Uplink PDCP data packet average delay measurement (UL PDCP Packet Average Delay per DRB per UE)

Uplink PDCP data packet average delay measurement is used to measure a PDCP queuing delay on a DRB at UE. A delay from a moment at which a data packet arrives at a PDCP upper layer to a moment at which an uplink grant (grant) for sending the data packet is available is measured. A purpose of the measurement is to perform QoS verification, QoS monitoring, or the like. A reference signal in a measurement object is not used in the measurement.

### 4. Uplink PDCP excess data packet delay measurement (UL PDCP Excess Packet Delay per DRB)

Uplink PDCP excess data packet delay measurement is used to measure a proportion of delays of PDCP data packets on a DRB at UE that exceed a configured delay threshold. A delay of each data packet is a delay from a moment at which the data packet arrives at a PDCP upper layer to a moment at which an uplink grant (grant) for sending the data packet is available. A purpose of the measurement is to perform QoS verification, QoS monitoring, or the like. A reference signal in a measurement object is not used in the measurement.

### 5. Event A3 (Event A3)

An event A3 is an event of an event-triggered reporting type. The event evaluates whether signal quality of a neighboring cell is higher than signal quality of a serving cell by a specific offset. An entering condition is: Mn + Ofn + Ocn - Hys > Mp + Ofp + Ocp + Off. An exiting condition is: Mn + Ofn + Ocn + Hys < Mp + Ofp + Ocp + Off. Specific meanings of related variables in the condition formulas are as follows:
Mp and Mn represent measurement results of the serving cell and the neighboring cell respectively.

Hys represents an amplitude hysteresis of a measurement result.

Ofp and Ofn represent frequency offsets of the serving cell and the neighboring cell respectively.

Ocp and Ocn represent cell offsets of the serving cell and the neighboring cell respectively.

Off represents an offset of the event A3.

The serving cell may be a special cell (Special Cell, SpCell). The SpCell may be specifically a primary cell (Primary Cell, PCell) and/or a primary secondary cell (Primary Secondary Cell, PSCell).

UE may trigger measurement reporting when the entering condition is continuously met within trigger time (TimeToTrigger).

### 6. Event A5 (Event A5)

An event A5 is an event of an event-triggered reporting type. The event evaluates whether signal quality of a serving cell is lower than a threshold 1 and whether signal quality of a neighboring cell is higher than a threshold 2. An entering condition is: Mp + Hys < Thresh1 and Mn + Ofn + Ocn - Hys > Thresh2. An exiting condition is: Mp - Hys > Thresh1 or Mn + Ofn + Ocn + Hys < Thresh2.

Mp and Mn represent measurement results of the serving cell and the neighboring cell respectively.

Hys represents an amplitude hysteresis of a measurement result.

Thresh1 and Thresh2 represent thresholds.

Ofn represents a frequency offset of the neighboring cell.

Ocn represents a cell offset of the neighboring cell.

The serving cell may be an SpCell. The SpCell may be specifically a PCell and/or a PSCell.

UE may trigger measurement reporting when the entering condition is continuously met within trigger time (TimeToTrigger).

### 7. Measurement identifier (MeasId)

One measurement identifier (measurement ID) associates one measurement object configuration with one reporting configuration. UE measures, based on a measurement ID according to a requirement of a reporting configuration, a measurement object associated with the measurement ID. When the UE sends a measurement report to a base station, the UE indicates a measurement ID corresponding to a reported measurement result, and the base station may determine a corresponding measurement object and reporting configuration based on the measurement ID.

### 8. Measurement report reporting manner

Based on a reporting configuration, UE may send a measurement report one or more times for specific measurement. Specifically, the reporting configuration may include a quantity of report times (reportAmount) parameter, a report interval (reportInterval) parameter, and the like. A quantity of report times indicates a quantity of times UE needs to send a measurement report of specific measurement after reporting for the measurement is triggered. A report interval indicates a time interval at which the UE sends a measurement report. For example, if a quantity of report times of specific measurement is 1 (that is, reportAmount=1), after triggering reporting for the measurement, the UE sends a measurement report only once. For another example, if a quantity of report times of specific measurement is N (that is, reportAmount=N, where N is greater than 1), after triggering reporting for the measurement, the UE sends a measurement report N times, where a time interval between two measurement reports is reportInterval.

### 9. Measurement report (MeasResults)

A measurement report may include a measurement identifier (MeasId), a serving cell measurement result (measResultServingMOList), a neighboring cell measurement result (measResultNeighCells), and the like. Particularly, if measurement associated with the measurement identifier is PDCP delay measurement, a PDCP delay measurement result (ul-PDCP-DelayValueResultList-r16) and/or a PDCP excess delay measurement result (ul-PDCP-ExcessDelayResultList-r17) may be included.

### 10. Bandwidth part (bandwidth part, BWP)

A maximum bandwidth of a 5G NR system can reach 400 MHz. However, due to diversity of 5G services, from the perspective of UE, some services of specific UE may not need a large transmission bandwidth. In addition, supporting a large transmission bandwidth also means high terminal costs. Therefore, a concept of BWP (BandWidth Part) is proposed in the 3GPP protocol for 5G NR.

The BWP means a segment of continuous spectrum resource configured by a network side for UE, and the UE transmits data on the BWP. The BWP may be less than a maximum transmission bandwidth on the network side. Therefore, flexible transmission bandwidth configurations on the network side and a UE side are implemented.

### 11. Reduced capability terminal (reduced capability UE, RedCap UE)

RedCap UE is a technology for further enhancement to 5G NR. A capability of a terminal of such a type is lower than that in enhanced mobile broadband (enhanced mobile broadband, eMBB) and ultra-reliable and low latency communication (ultra-reliable and low latency communication, URLLC). For example, the RedCap UE may have the following reduced feature complexity: a reduced maximum bandwidth capability, a reduced transmit/receive antenna quantity/antenna channel (branch) quantity, a reduced maximum multiple-input multiple-output (multiple-input multiple-output, MIMO) layer quantity capability, a reduced maximum modulation order (modulation order) capability, and the like.

The following describes in detail the solutions provided in embodiments of this application with reference to FIG. 2 to FIG. 5.

A network device may provide measurement configuration information related to delay measurement for a terminal device, so that the terminal device may perform a delay measurement procedure based on the measurement configuration information, for example, perform delay measurement, and report a measurement result of the delay measurement. However, if the network device initiates a measurement object modification procedure in a process in which the terminal device performs delay measurement, the delay measurement procedure may be affected. For example, reporting the measurement result of the delay measurement by the terminal device may be affected. Consequently, efficiency of the delay measurement procedure is affected, or even the delay measurement procedure fails. Therefore, how to reduce impact of the measurement object modification procedure on the delay measurement procedure of the terminal device to provide service performance of the terminal device is a problem that needs to be considered currently.

Based on the foregoing problem, FIG. 2 is an example flowchart of a method 200 according to an embodiment of this application. In the method 200, efficiency of delay measurement can be improved in a modification procedure of a first measurement object, and resources of a terminal device can be saved. The following provides example descriptions of the method 200 with reference to steps in FIG. 2.

Optionally, in S201, a terminal device sends first capability information to a network device. Correspondingly, the network device receives the first capability information from the terminal device.

It may be understood that a manner and an occasion for sending the first capability information by the terminal device to the network device are not limited in this application. For example, the terminal device may reuse an existing message in a capability query procedure to send the first capability information to the network device, or may send the first capability information to the network device in another procedure. This is not limited in this application.

In a possible example 1, the first capability information indicates that the terminal device supports one or more of the following in a modification procedure of a second measurement object associated with delay measurement:
supporting retention of a reporting record corresponding to a second measurement identifier, supporting timing keeping of a timer corresponding to the second measurement identifier, or supporting retention of information associated with the second measurement identifier, where the second measurement identifier is associated with the second measurement object, and the second measurement identifier is associated with the delay measurement.

The delay measurement includes packet data convergence protocol data packet average delay measurement and/or packet data convergence protocol excess data packet delay measurement.

The second measurement object may be any measurement object associated with the delay measurement. The measurement object associated with the delay measurement may mean that at least one measurement identifier in one or more measurement identifiers associated with the measurement object is associated with the delay measurement. In other words, the first capability information indicates that in a modification procedure of the measurement object associated with the delay measurement, the terminal device supports one or more operations indicated by the first capability information.

The second measurement identifier may be a measurement identifier associated with the delay measurement in one or more measurement identifiers associated with the second measurement object. The measurement identifier associated with the delay measurement may mean that a reporting configuration corresponding to the measurement identifier includes configuration information of the delay measurement, or the measurement identifier is used to report a measurement result of the delay measurement.

S202: The network device sends first measurement configuration information to the terminal device. Correspondingly, the terminal device receives the first measurement configuration information from the network device.

For example, the first measurement configuration information indicates to modify a first measurement object, and the first measurement object is associated with a first measurement identifier.

It may be understood that the first measurement object may be configured by the network device for the terminal device. For example, before S202, the network device sends third measurement configuration information to the terminal device, where the third measurement configuration information includes a first measurement object configuration and one or more measurement identifiers associated with the first measurement object, and the one or more measurement identifiers include the first measurement identifier. The third measurement configuration information further includes information such as a reporting configuration corresponding to the first measurement identifier.

Optionally, when the first measurement identifier is associated with the delay measurement, the network device may trigger a modification procedure of the first measurement object (that is, send the first measurement configuration information) when determining that the terminal device supports performing a second operation in the modification procedure of the first measurement object. The second operation includes one or more of the following operations: The terminal device retains a reporting record corresponding to the first measurement identifier, the terminal device keeps timing of a timer corresponding to the first measurement identifier, or the terminal device retains information associated with the first measurement identifier.

For example, the network device may determine, based on the first capability information received in S201, that the terminal device supports performing the second operation in the modification procedure of the first measurement object. It may be understood that the first measurement object is one of second measurement objects.

Optionally, after the terminal device receives the first measurement configuration information, when determining that the first measurement configuration information is used to modify the first measurement object, the terminal device determines whether the first measurement identifier is associated with the delay measurement. For example, the terminal device determines whether the reporting configuration associated with the first measurement identifier includes configuration information of the packet data convergence protocol data packet average delay measurement and/or configuration information of the packet data convergence protocol excess data packet delay measurement. If the reporting configuration associated with the first measurement identifier includes the configuration information of the packet data convergence protocol data packet average delay measurement and/or the configuration information of the packet data convergence protocol excess data packet delay measurement, the terminal device determines that the first measurement identifier is associated with the delay measurement; or if the reporting configuration associated with the first measurement identifier does not include the configuration information of the packet data convergence protocol data packet average delay measurement and/or the configuration information of the packet data convergence protocol excess data packet delay measurement, the terminal device determines that the first measurement identifier is not associated with the delay measurement. The configuration information of the packet data convergence protocol data packet average delay measurement may also be referred to as an uplink delay value configuration (Uplink-DelayValueConfig), and the uplink delay value configuration is used by the terminal device to perform uplink packet data convergence protocol data packet average delay measurement. The configuration information of the packet data convergence protocol excess data packet delay measurement may also be referred to as an uplink excess delay configuration (Uplink-ExcessDelayConfig), and the uplink excess delay configuration is used by the terminal device to perform uplink packet data convergence protocol excess data packet delay measurement.

Further, the terminal device performs different operations based on a result of determining. It may be understood that when the first measurement object is associated with a plurality of measurement identifiers, the terminal device may perform the foregoing determining for each measurement identifier, and perform different operations for each measurement identifier based on a result of determining. The following separately describes two cases by using examples.

### Case 1:

S203a: The terminal device performs a first operation when the first measurement identifier is not associated with the delay measurement.

For example, the first operation includes one or more of the following operations: The terminal device removes (remove) the reporting record corresponding to the first measurement identifier, the terminal device stops (stop) the timer corresponding to the first measurement identifier, or the terminal device resets (reset) the information associated with the first measurement identifier.

For example, the reporting record corresponding to the first measurement identifier includes one or more of the following: the first measurement identifier, a trigger cell list, a quantity of report times, a trigger reference signal list, a trigger source list, a trigger resource pool list, or the like. The trigger cell list includes information about a cell that meets a reporting condition, the quantity of report times is a quantity of times the terminal device has reported a measurement report to the network device, the trigger reference signal list includes information about a reference signal that meets the reporting condition, the trigger source list includes a sidelink (sidelink) source (source) that meets the reporting condition, and the trigger resource pool list includes a sidelink (sidelink) resource pool (resource pool) that meets the reporting condition. The timer corresponding to the first measurement identifier includes one or more of the following timers: a periodic reporting timer, a timer T321, or a timer T322. The periodic reporting timer is used to control a time interval at which the terminal device reports a measurement report corresponding to the first measurement identifier. The timer T321 is used to control the terminal device to report cell global identifier (cell global identifier, CGI) information. The timer T322 is used to control the terminal device to report system frame number (system frame number, SFN) and frame timing difference (SFN and frame timing difference, SFTD) information. The information associated with the first measurement identifier may be, for example, trigger time information (timeToTrigger).

### Case 2:

S203b: The terminal device performs the second operation when the first measurement identifier is associated with the delay measurement.

For example, the second operation includes one or more of the following operations: The terminal device retains the reporting record corresponding to the first measurement identifier, the terminal device keeps timing of the timer corresponding to the first measurement identifier, or the terminal device retains the information associated with the first measurement identifier.

That the terminal device retains the reporting record corresponding to the first measurement identifier means that the terminal device does not remove (or does not delete) the reporting record corresponding to the first measurement identifier. Therefore, in this case, in the modification procedure of the first measurement object (or after the first measurement object is modified), the terminal device may still perform delay measurement and/or report a measurement result of the delay measurement based on an existing reporting record, and does not need to regenerate a reporting record, so that unnecessary re-reporting can be avoided. For example, the reporting configuration corresponding to the first measurement identifier indicates that the quantity of report times is 8, that is, the terminal device needs to report a measurement result eight times. It is assumed that after the terminal device has reported the measurement result four times, the network device triggers the modification procedure of the first measurement object. **In** this case, if the terminal device removes the reporting record, the terminal device needs to re-report the measurement result eight times. This affects delay measurement efficiency, and causes additional measurement result reporting (for example, in the foregoing example, the terminal device may finally report the measurement result 12 times), resulting in unnecessary signaling overheads. However, in the solution of the method 200, the terminal device retains the reporting record corresponding to the first measurement identifier in the modification procedure of the first measurement object, so that the terminal device can continue to report the measurement result of the delay measurement based on the reporting configuration corresponding to the first measurement identifier, thereby improving efficiency and saving resources.

That the terminal device keeps timing of the timer corresponding to the first measurement identifier means that if a timer corresponding to the first measurement identifier is running, the terminal device may not stop the timer, but keep the timer running. Therefore, in this case, in the modification procedure of the first measurement object (or after the first measurement object is modified), the terminal device does not need to reset the timer, but may report the measurement result of the delay measurement based on an original report interval (reportInterval), thereby improving efficiency, saving resources, and avoiding a case in which the measurement result fails to be reported because the measurement result is not reported based on the report interval configured by the network device.

That the terminal device retains the information associated with the first measurement identifier means that the terminal device does not reset the information associated with the first measurement identifier. For example, the trigger time (timeToTrigger) information associated with the first measurement identifier is not reset, so that efficiency can be improved.

In conclusion, in the foregoing solution, when the first measurement identifier is associated with the delay measurement, the terminal device does not reset or does not remove, in the modification procedure of the first measurement object, information (that is, information such as the reporting record and the timer in the foregoing example) that is associated with the first measurement identifier and that is used for measurement (or used for reporting the measurement result). Therefore, the terminal device may continue to report the measurement result of the delay measurement based on such information, thereby improving delay measurement efficiency, avoiding unnecessary signaling overheads, and improving service performance of the terminal device.

It may be understood that, in the modification procedure of the first measurement object, both case 1 and case 2 may occur. For example, in the modification procedure of the first measurement object, in measurement identifiers associated with the first measurement object, some measurement identifiers correspond to case 1, and some measurement identifiers correspond to case 2. For another example, in the modification procedure of the first measurement object, all measurement identifiers associated with the first measurement object correspond to case 1, or all measurement identifiers associated with the first measurement object correspond to case 2.

In the foregoing solution, when the first measurement identifier is associated with the delay measurement, the network device may trigger the modification procedure of the first measurement object (that is, send the first measurement configuration information) when determining that the terminal device supports performing the second operation in the modification procedure of the first measurement object. In another possible implementation, if the network device determines that the terminal device does not support performing the second operation in the modification procedure of the first measurement object, the network device may not trigger the modification procedure of the first measurement object before the delay measurement corresponding to the first measurement identifier is completed. The following describes this implementation by using an example.

In another possible example 2, the first capability information sent by the terminal device to the network device in S201 indicates that the terminal device does not support one or more of the following in a modification procedure of a second measurement object associated with delay measurement:
supporting retention of a reporting record corresponding to a second measurement identifier, supporting timing keeping of a timer corresponding to the second measurement identifier, or supporting retention of information associated with the second measurement identifier, where the second measurement identifier is associated with the second measurement object, and the second measurement identifier is associated with the delay measurement.

In another possible example, the terminal device does not send the first capability information to the network device. Because the network device does not receive the first capability information, the network device determines that the terminal device does not support one or more of the following:
supporting retention of a reporting record corresponding to a second measurement identifier, supporting timing keeping of a timer corresponding to the second measurement identifier, or supporting retention of information associated with the second measurement identifier, where the second measurement identifier is associated with the second measurement object, and the second measurement identifier is associated with the delay measurement. For a definition of the first capability information, refer to the description in the foregoing possible example 1. Details are not described herein again.

The network device may determine, based on the first capability information, that the terminal device does not support performing the second operation in the modification procedure of the first measurement object.

In this case, the network device does not trigger the modification procedure of the first measurement object before the delay measurement corresponding to the first measurement identifier is completed. In other words, the network device triggers the modification procedure of the first measurement object only after the delay measurement corresponding to the first measurement identifier is completed. After receiving the measurement result of the delay measurement corresponding to the first measurement identifier, the network device may determine that the delay measurement is completed.

Based on the foregoing solution, before the delay measurement is completed, the network device does not trigger the modification procedure of the measurement object associated with the delay measurement, to avoid impact of the measurement object modification procedure on the delay measurement.

The network device may provide measurement configuration information related to the delay measurement for the terminal device, so that the terminal device may perform a delay measurement procedure based on the measurement configuration information, for example, perform delay measurement, and report a measurement result of the delay measurement. However, if the network device initiates a measurement object removal procedure (or referred to as deletion procedure) in a process in which the terminal device performs delay measurement, the delay measurement procedure may be affected. For example, reporting the measurement result of the delay measurement by the terminal device may be affected, and consequently, measurement result reporting fails. Therefore, how to reduce the impact of the measurement object removal procedure on the delay measurement procedure of the terminal device to provide a success rate of the delay measurement procedure is a problem that needs to be considered currently.

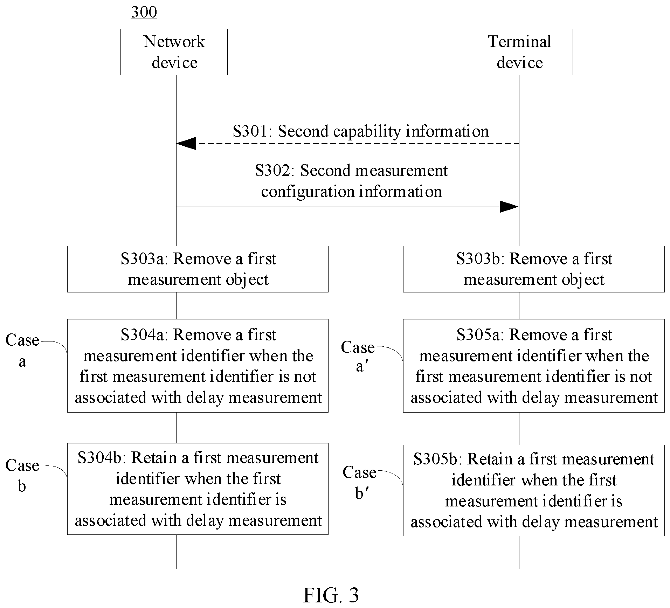

Based on the foregoing problem, FIG. 3 is an example flowchart of a method 300 according to an embodiment of this application. In the method 300, a removal procedure of a first measurement object does not affect reporting a measurement result of delay measurement by a terminal device, thereby avoiding a case in which the removal procedure of the first measurement object causes a failure of a delay measurement procedure. The following provides example descriptions of the method 300 with reference to steps in FIG. 3.

Optionally, in S301, a terminal device sends second capability information to a network device. Correspondingly, the network device receives the second capability information from the terminal device.

In a possible example 1, the second capability information indicates that in a removal procedure of a second measurement object associated with delay measurement, the terminal device supports retention of a second measurement identifier associated with the second measurement object, and the second measurement identifier is associated with the delay measurement. That the terminal device supports retention of the second measurement identifier associated with the second measurement object means that the terminal device supports not deleting the second measurement identifier.

For meanings of the second measurement object and the second measurement identifier, refer to the descriptions of the second measurement object and the second measurement identifier in S201 in the method 200. Details are not described herein again.

S302: The network device sends second measurement configuration information to the terminal device. Correspondingly, the terminal device receives the second measurement configuration information from the network device.

For example, the second measurement configuration information indicates to remove a first measurement object, and the first measurement object is associated with a first measurement identifier.

Optionally, before S302, the network device may further determine whether the first measurement identifier is associated with the delay measurement. For example, the network device determines whether a reporting configuration associated with the first measurement identifier includes configuration information of packet data convergence protocol data packet average delay measurement and/or configuration information of packet data convergence protocol excess data packet delay measurement. If the reporting configuration associated with the first measurement identifier includes the configuration information of the packet data convergence protocol data packet average delay measurement and/or the configuration information of the packet data convergence protocol excess data packet delay measurement, the network device determines that the first measurement identifier is associated with the delay measurement; or if the reporting configuration associated with the first measurement identifier does not include the configuration information of the packet data convergence protocol data packet average delay measurement and/or the configuration information of the packet data convergence protocol excess data packet delay measurement, the network device determines that the first measurement identifier is not associated with the delay measurement.

Optionally, when the first measurement identifier is associated with the delay measurement, the network device may trigger a removal procedure of the first measurement object (that is, send the second measurement configuration information) when determining that the terminal device supports retention of the first measurement identifier in the removal procedure of the first measurement object. For example, the network device may determine, based on the second capability information received in S301, that the terminal device supports retention of the first measurement identifier in the removal procedure of the first measurement object. It may be understood that the first measurement object is one of second measurement objects.

S303a: The network device removes the first measurement object.

S303b: The terminal device removes the first measurement object.

For example, the terminal device removes the first measurement object based on the second measurement configuration information.

Further, the network device performs different operations on the first measurement identifier based on a result of determining. The following separately describes two cases by using examples.

Case a: The network device removes the first measurement identifier when the first measurement identifier is not associated with the delay measurement.

Case b: The network device retains the first measurement identifier when the first measurement identifier is associated with the delay measurement. That the network device retains the first measurement identifier means that the network device does not delete the first measurement identifier.

It may be understood that when the first measurement identifier is associated with the delay measurement, the first measurement identifier may be used by the terminal device to report a measurement result of the delay measurement, and the network device may determine, based on the first measurement identifier, that the measurement result reported by the terminal device is the measurement result of the delay measurement. Therefore, if the network device deletes the first measurement identifier, after the terminal device reports the measurement result of the delay measurement, the network device may not be able to identify the measurement result, and consequently a delay measurement procedure fails. However, in the foregoing solution, the network device may retain, in the removal procedure of the first measurement object, the first measurement identifier associated with the delay measurement. Therefore, a case in which the delay measurement procedure fails because the network device deletes the first measurement identifier can be avoided.

Optionally, after the terminal device receives the second measurement configuration information, when determining that the second measurement configuration information is used to remove the second measurement object, the terminal device determines whether the first measurement identifier is associated with the delay measurement. For a specific manner, refer to the descriptions of S201 in the method 200. Details are not described herein.

It may be understood that a sequence of performing S302, S303a, and S304a/S304b by the network device is not limited in this application, and a sequence of performing S303b and S305a/S305b by the terminal device is not limited in this application.

Further, the terminal device performs different operations on the first measurement identifier based on a result of determining. The following separately describes two cases by using examples.

Case a': The terminal device removes the first measurement identifier when the first measurement identifier is not associated with the delay measurement.

Case b': The terminal device retains the first measurement identifier when the first measurement identifier is associated with the delay measurement. That the terminal device retains the first measurement identifier means that the terminal device does not delete the first measurement identifier.

Further, in case b', the terminal device may report, to the network device, the measurement result of the delay measurement associated with the first measurement identifier. **In** other words, the terminal device reports the measurement result of the delay measurement to the network device by using the first measurement identifier. The terminal device may report the measurement result based on the reporting configuration corresponding to the first measurement identifier.

Therefore, based on the foregoing solution, the terminal device may retain, in the removal procedure of the first measurement object, the first measurement identifier associated with the delay measurement. Therefore, a case in which the delay measurement procedure fails when the delay measurement result cannot be reported because the terminal device deletes the first measurement identifier can be avoided.

Optionally, after receiving the measurement result of the delay measurement associated with the first measurement identifier, the network device removes the first measurement identifier.

Optionally, after receiving the measurement result of the delay measurement associated with the first measurement identifier, the network device sends fourth measurement configuration information to the terminal device, where the fourth measurement configuration information indicates to remove the first measurement identifier.

Optionally, after reporting the measurement result of the delay measurement corresponding to the first measurement identifier, the terminal device removes the first measurement identifier. For example, the terminal device receives the fourth measurement configuration information from the network device, and removes the first measurement identifier based on the fourth measurement configuration information. For another example, the terminal device autonomously removes the first measurement identifier.

Therefore, based on the foregoing solution, the terminal device and the network device remove the first measurement identifier after the delay measurement is completed, so that resource occupation can be reduced.

In the foregoing solution, when the first measurement identifier is associated with the delay measurement, the network device may trigger the removal procedure of the first measurement object (that is, send the second measurement configuration information) when determining that the terminal device supports retention of the first measurement identifier in the removal procedure of the first measurement object. In another possible implementation, if the network device determines that the terminal device does not support retention of the first measurement identifier in the removal procedure of the first measurement object, the network device may not trigger the removal procedure of the first measurement object before the delay measurement corresponding to the first measurement identifier is completed. The following describes this implementation by using an example.

In another possible example 2, the second capability information sent by the terminal device to the network device in S301 indicates that in a removal procedure of a second measurement object associated with delay measurement, the terminal device does not support retention of a second measurement identifier, and the second measurement identifier is associated with the delay measurement.

In another possible example, the terminal device does not send the second capability information to the network device. Because the network device does not receive the second capability information, the network device determines that the terminal device does not support retention of a second measurement identifier in a removal procedure of a second measurement object associated with delay measurement. For a definition of the second capability information, refer to the description in the foregoing possible example 1. Details are not described herein again.

The network device determines, based on the second capability information, that the terminal device does not support retention of the first measurement identifier in the removal procedure of the first measurement object.

In this case, the network device does not trigger the removal procedure of the first measurement object before the delay measurement associated with the first measurement object is completed. In other words, the network device triggers the removal procedure of the first measurement object only after the delay measurement corresponding to the first measurement identifier is completed. After receiving the measurement result of the delay measurement corresponding to the first measurement identifier, the network device may determine that the delay measurement is completed.

Based on the foregoing solution, before the delay measurement is completed, the network device does not trigger the removal procedure of the measurement object associated with the delay measurement, to avoid impact of the measurement object removal procedure on the delay measurement procedure.

It may be understood that the method 300 may be independently implemented, or may be implemented in combination with the method 200. In an implementation, the first capability information and the second capability information may be carried in a same message, a same information element, or a same field.

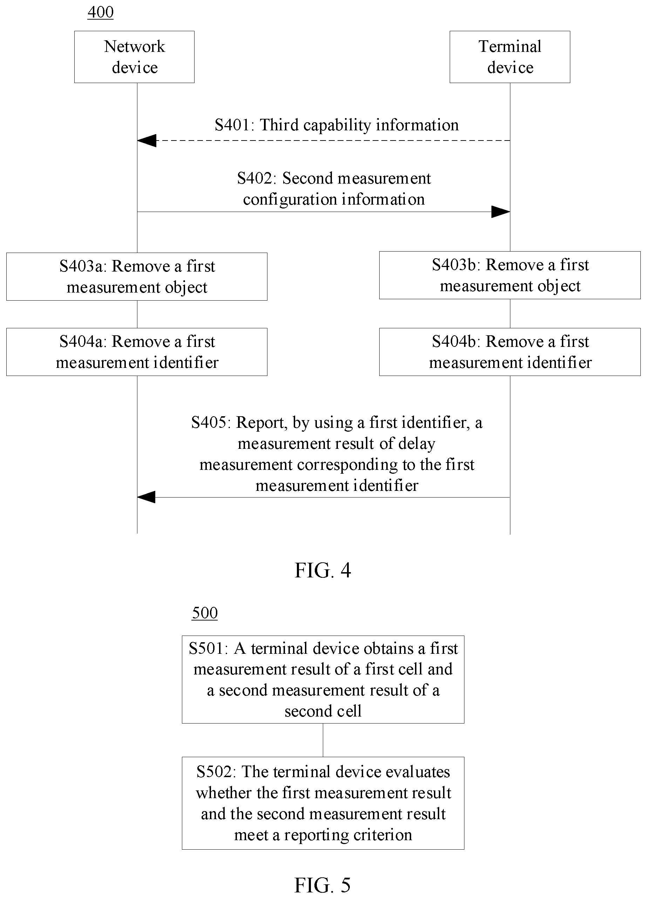

FIG. 4 is an example flowchart of a method 400 according to an embodiment of this application. In the method 400, when a first measurement identifier associated with delay measurement is removed in a removal procedure of a first measurement object, reporting a measurement result of the delay measurement by a terminal device is not affected, thereby avoiding a case in which the removal procedure of the first measurement object causes a failure of a delay measurement procedure. The following provides example descriptions of the method 400 with reference to steps in FIG. 4.

Optionally, in S401, a terminal device sends third capability information to a network device. Correspondingly, the network device receives the third capability information from the terminal device.

In a possible example 1, the third capability information indicates that the terminal device supports reporting a measurement result of delay measurement by using a first identifier in a removal procedure of a second measurement object associated with the delay measurement, or the third capability information indicates that the terminal device supports reporting a measurement result of delay measurement corresponding to a second measurement identifier by using the first identifier when the second measurement identifier associated with the delay measurement is removed.

For meanings of the second measurement object and the second measurement identifier, refer to the descriptions of the second measurement object and the second measurement identifier in S201 in the method 200. Details are not described herein again.

S402: The network device sends second measurement configuration information to the terminal device. Correspondingly, the terminal device receives the second measurement configuration information from the network device.

For example, the second measurement configuration information indicates to remove a first measurement object, and the first measurement object is associated with a first measurement identifier.

Optionally, before S402, the network device may further determine whether the first measurement identifier is associated with the delay measurement. For a specific manner, refer to the descriptions of S302 in the method 300. Details are not described herein.

Optionally, when determining that the terminal device supports reporting a measurement result of delay measurement corresponding to the first measurement identifier by using the first identifier in a removal procedure of the first measurement object, the network device may trigger the removal procedure of the first measurement object (that is, send the second measurement configuration information). For example, the network device may determine, based on the third capability information received in S401, that the terminal device supports reporting the measurement result of the delay measurement corresponding to the first measurement identifier by using the first identifier in the removal procedure of the first measurement object. It may be understood that the first measurement object is one of second measurement objects.

S403a: The network device removes the first measurement object.

S403b: The terminal device removes the first measurement object.

For example, the terminal device removes the first measurement object based on the second measurement configuration information.

S4034: The network device removes the first measurement identifier.

S404b: The terminal device removes the first measurement identifier.

For example, after the terminal device receives the second measurement configuration information, when determining that the second measurement configuration information is used to remove the first measurement object, the terminal device removes the first measurement identifier associated with the first measurement object.

It may be understood that a sequence of performing S402, S403a, and S404a by the network device is not limited in this application, and a sequence of performing S403b and S404b by the terminal device is not limited in this application.

S405: The terminal device reports, by using the first identifier, the measurement result of the delay measurement corresponding to the first measurement identifier.

For example, after the first measurement identifier is removed, the terminal device reports, by using the first identifier different from the first measurement identifier, the measurement result of the delay measurement corresponding to the first measurement identifier.

The first identifier may be a preconfigured identifier, may be an identifier specified in a protocol, or may be an identifier determined by the terminal device and the network device through negotiation. The first identifier may be an identifier specially used to report a measurement result of delay measurement in a measurement object removal procedure, or may be an identifier used in another procedure. This is not limited in this application. A value of the first identifier is not limited in this application. In an example, the first identifier may be used as a special measurement identifier. Because a value range of the measurement identifier is 1 to 64, the value of the first identifier may be any value reserved between 1 and 64. Alternatively, the value of the first identifier may be a value other than 1 to 64. For example, the value of the first identifier may be 0. This is not limited in this application. The first identifier is used to report a measurement result of delay measurement corresponding to a measurement identifier when the measurement identifier associated with the delay measurement is deleted. The first identifier may include one or more identifiers.

A manner in which the terminal device reports the delay measurement result by using the first identifier is not limited in this application. In a possible implementation, the terminal device reports the measurement result based on a reporting configuration corresponding to the first measurement identifier. In another possible implementation, the terminal device reports the measurement result based on a preconfigured reporting configuration.

Correspondingly, the network device receives the measurement result from the terminal device, and determines, based on the first identifier, that the measurement result is the measurement result of the delay measurement.

Based on the foregoing solution, in the removal procedure of the first measurement object, when the first measurement identifier is removed, the terminal device may use the first identifier different from the first measurement identifier to report the measurement result of the delay measurement, to avoid a case in which the measurement result of the delay measurement cannot be reported because the first measurement identifier is removed in the removal procedure of the first measurement object.

In the foregoing solution, if the first measurement identifier is associated with the delay measurement, when determining that the terminal device supports reporting the measurement result of the delay measurement corresponding to the first measurement identifier by using the first identifier in the removal procedure of the first measurement object, the network device may trigger the removal procedure of the first measurement object (that is, send the second measurement configuration information). In another possible implementation, if the network device determines that the terminal device does not support reporting the measurement result of the delay measurement corresponding to the first measurement identifier by using the first identifier in the removal procedure of the first measurement object, the network device may not trigger the removal procedure of the first measurement object before the delay measurement corresponding to the first measurement identifier is completed. The following describes this implementation by using an example.

In another possible example 2, the third capability information sent by the terminal device to the network device in S401 indicates that the terminal device does not support reporting a measurement result of delay measurement corresponding to a second measurement identifier by using a first identifier in a removal procedure of a second measurement object associated with the delay measurement, and the second measurement identifier is associated with the delay measurement.

In another possible example, the terminal device does not send the third capability information to the network device. Because the network device does not receive the third capability information, the network device determines that the terminal device does not support reporting a measurement result of delay measurement corresponding to a second measurement identifier by using a first identifier in a removal procedure of a second measurement object associated with the delay measurement. For a definition of the second capability information, refer to the description in the foregoing possible example 1. Details are not described herein again.

The network device determines, based on the third capability information, that the terminal device does not support reporting the measurement result of the delay measurement corresponding to the first measurement identifier by using the first identifier in the removal procedure of the first measurement object.

In this case, the network device does not trigger the removal procedure of the first measurement object before the delay measurement associated with the first measurement object is completed. In other words, the network device triggers the removal procedure of the first measurement object only after the delay measurement corresponding to the first measurement identifier is completed. After receiving the measurement result of the delay measurement corresponding to the first measurement identifier, the network device may determine that the delay measurement is completed.

Based on the foregoing solution, before the delay measurement is completed, the network device does not trigger the removal procedure of the measurement object associated with the delay measurement, to avoid impact of the measurement object removal procedure on the delay measurement.

It may be understood that the method 400 may be independently implemented, or may be implemented in combination with the method 200 and/or the method 300. In an implementation, two or three of the first capability information, the second capability information, and the third capability information may be carried in a same message, a same information element, or a same field.

It may be understood that when the method 300 and the method 400 are implemented in combination, if the terminal device not only supports retention of the first measurement identifier associated with the delay measurement in the removal procedure of the first measurement object, but also supports reporting the measurement result of the delay measurement corresponding to the first measurement identifier by using the first identifier in the removal procedure of the first measurement object, the network device may indicate the terminal device to report the measurement result of the delay measurement in any one of the manners.

In some procedures, the terminal device performs cell measurement, and reports a cell measurement result to the network device. However, in some cases, the terminal device may report some invalid measurement results or even measurement results that mislead the network device. For example, the terminal device may report measurement results of two same cells. Consequently, resources of the terminal device are wasted, or even the terminal device may perform inappropriate handover. How to save resources of the terminal device and avoid inappropriate handover that may occur in a cell measurement process of the terminal device is a problem that needs to be considered currently.

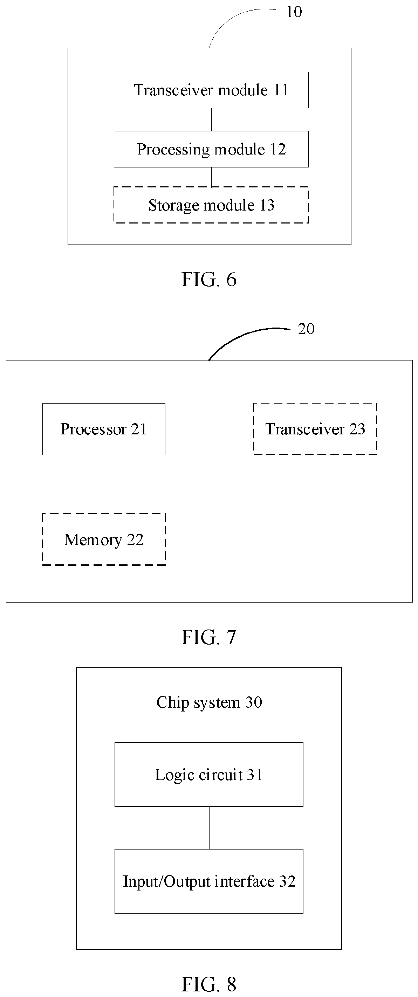

Based on the foregoing problem, FIG. 5 is a schematic flowchart of a method 500 according to an embodiment of this application. In the method 500, a terminal device can be prevented from triggering measurement reporting based on measurement results of a same cell, thereby reducing a resource waste and avoiding inappropriate handover. The following provides example descriptions of the method 500 with reference to steps in FIG. 7.

S501: A terminal device obtains a first measurement result of a first cell and a second measurement result of a second cell.

For example, the first cell and the second cell are different cells, and the second cell is a serving cell of the terminal device.

It may be understood that the serving cell may be a special cell (special cell, SpCell), and the SpCell may be a primary cell (primary cell, PCell) and/or a primary secondary cell (primary secondary cell, PSCell). The first cell is associated with a first measurement object, the second cell is associated with a second measurement object, the terminal device measures the first cell based on the first measurement object to obtain the first measurement result, and the terminal device measures the second cell based on the second measurement object to obtain the second measurement result.

S502: The terminal device evaluates whether the first measurement result and the second measurement result meet a reporting criterion.

For example, after obtaining the first measurement result and the second measurement result, the terminal device evaluates whether the first measurement result and the second measurement result meet the reporting criterion. In an implementation, the reporting criterion may be a reporting criterion in a reporting configuration associated with the first measurement object. This is not limited in this application.

When the reporting criterion is met, the terminal device reports a measurement report to a network device, where the measurement report includes the first measurement result and the second measurement result.

In an example, the reporting criterion may be an event A3 or an event A5. For example, the reporting criterion includes one or more of the following: a difference between signal quality of the first cell and signal quality of the second cell is greater than a first threshold, where the first threshold may be, for example, an offset; or signal quality of the first cell is greater than a second threshold, and signal quality of the second cell is less than a third threshold. It may be understood that the first measurement result includes the signal quality of the first cell, and the second measurement result includes the signal quality of the second cell.

Optionally, the terminal device determines whether the first cell and the second cell are a same cell.

In a possible implementation, before S501, the terminal device may determine whether the first cell and the second cell are a same cell. For example, the terminal device receives fifth configuration information from the network device, where the fifth configuration information indicates to measure the first measurement object and the second measurement object. The first cell is associated with the first measurement object, and the second cell is associated with the second measurement object. The terminal device determines whether the first cell and the second cell are a same cell. When the first cell and the second cell are different cells, the terminal device separately measures the first cell and the second cell, to obtain the first measurement result and the second measurement result. When the first cell and the second cell are a same cell, the terminal device may not measure the first cell, or the terminal device may not measure the second cell. According to the foregoing solution, unnecessary measurement can be reduced, thereby saving resources of the terminal device. Specifically, for example, the second cell is a PCell (or a PSCell). Before performing measurement, the terminal device determines whether the first cell is the PCell (or the PSCell). If the first cell is the PCell (or the PSCell), it indicates that the first cell and the second cell are a same cell. In this case, the terminal device does not measure the first cell, or does not measure the second cell.

In another possible implementation, before S502, the terminal device may determine whether the first cell and the second cell are a same cell. For example, after obtaining the first measurement result and the second measurement result, the terminal device determines whether the first cell and the second cell are a same cell. When the first cell and the second cell are different cells, the terminal device evaluates whether the first measurement result and the second measurement result meet the reporting criterion. When the first cell and the second cell are a same cell, the terminal device does not evaluate whether the first measurement result and the second measurement result meet the reporting criterion. According to the foregoing solution, a resource waste caused by evaluating measurement results of a same cell and reporting the measurement results of the same cell to the network device can be avoided, and possible inappropriate handover can be avoided. The inappropriate handover may be that the terminal device initiates a cell handover procedure in a current serving cell, and is handed over to the cell again. Specifically, for example, the second cell is a PCell (or a PSCell), and the terminal device determines whether the first cell is the PCell (or the PSCell). If the first cell is the PCell (or the PSCell), it indicates that the first cell and the second cell are a same cell. In this case, the terminal device does not evaluate whether the first measurement result and the second measurement result meet the reporting criterion.

In another possible implementation, after S502, the terminal device may determine whether the first cell and the second cell are a same cell. For example, after the terminal device obtains the first measurement result and the second measurement result, if the terminal device determines, through evaluation, that the first measurement result and the second measurement result meet the reporting criterion, the terminal device further determines whether the first cell and the second cell are a same cell. When the first cell and the second cell are different cells, the terminal device reports the measurement report to the network device; or when the first cell and the second cell are a same cell, the terminal device does not report the measurement report to the network device. According to the foregoing solution, reporting a measurement report triggered by measurement results of a same cell to the network device can be avoided, thereby reducing a resource waste and avoiding inappropriate handover. For example, the second cell is a PCell (or a PSCell). When the terminal device obtains the first measurement result and the second measurement result, and determines that the first measurement result and the second measurement result meet the reporting criterion, the terminal device determines whether the first cell is the PCell (or the PSCell). If the first cell is the PCell (or the PSCell), it indicates that the first cell and the second cell are a same cell. In this case, the terminal device does not report a measurement report triggered by measurement results of the PCell (or the PSCell) to a network.

Based on the foregoing solution, when the first cell and the second cell are different cells, the terminal device evaluates whether the first measurement result corresponding to the first cell and the second measurement result corresponding to the second cell meet the reporting criterion. When the first cell and the second cell are a same cell, the terminal device does not measure the first cell or the second cell, or the terminal device does not evaluate whether the first measurement result and the second measurement result meet the reporting criterion, or the terminal device does not report the measurement report corresponding to the first measurement result and the second measurement result. This prevents the terminal device from triggering measurement reporting based on measurement results of a same cell, thereby reducing a resource waste and avoiding inappropriate handover.

In a specific example, the reporting configuration associated with the first measurement object includes the foregoing reporting criterion (for example, the event A3 or the event A5). It is assumed that an SpCell is associated with the first measurement object and the second measurement object other than the first measurement object. Even if the second measurement object is a currently specified measurement object used to obtain an SpCell result, the terminal device does not use the SpCell associated with the first measurement object as a neighboring cell of the SpCell associated with the first measurement object. Therefore, the terminal device can be prevented from triggering measurement reporting based on measurement results of a same cell.

It may be understood that the foregoing solution is described by using an example in which the second cell is a serving cell of the terminal device and the first cell is a neighboring cell of the terminal device. However, in another possible implementation, both the first cell and the second cell may be neighboring cells of the terminal device. This is not limited in this application.

It may be further understood that, in a possible implementation scenario, the second measurement object corresponds to an active bandwidth part of the terminal device, and the first measurement object does not correspond to the active bandwidth part of the terminal device. The foregoing solution may be applied to a handover procedure in the active bandwidth part.

It may be further understood that, in a possible implementation scenario, the terminal device in the method 500 may be RedCap UE. In this case, the second cell is a PCell. Therefore, when the first cell is not the PCell, the terminal device determines that the first cell and the second cell are not a same cell. The second measurement object is a currently specified measurement object used to obtain an SpCell result, but a PCell on the first measurement object is not considered as a neighboring cell.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 6 is a block diagram of a communication apparatus 10 according to an embodiment of this application. The apparatus 10 includes a transceiver module 11 and/or a processing module 12. The transceiver module 11 may implement a corresponding communication function. The processing module 12 is configured to perform data processing. In other words, the transceiver module 11 is configured to perform receiving and sending related operations. The processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device or a network element in the foregoing method embodiments.

In a first design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform a processing related operation of the terminal device in the foregoing method embodiments.

In a possible implementation, for the transceiver module 11, the apparatus 10 may implement the steps or the procedures performed by the terminal device in the method 400 in the foregoing method embodiments. The transceiver module 11 is configured to receive first measurement configuration information, where the first measurement configuration information indicates to modify a first measurement object, and the first measurement object is associated with a first measurement identifier; and the processing module 12 is configured to perform a first operation when the first measurement identifier is not associated with delay measurement; or the processing module 12 is configured to perform a second operation when the first measurement identifier is associated with the delay measurement.

In another possible implementation, the apparatus 10 may implement the steps or the procedures performed by the terminal device in the method 700 in the foregoing method embodiments. The processing module 12 is configured to obtain a first measurement result of a first cell and a second measurement result of a second cell, where the second cell is a serving cell of the terminal device, the second cell and the first cell are different cells, the first cell is associated with a first measurement object, and the second cell is associated with a second measurement object; and the processing module 12 is further configured to evaluate whether the first measurement result and the second measurement result meet a reporting criterion.

In another possible implementation, the apparatus 10 may implement the steps or the procedures performed by the terminal device in the method 500 in the foregoing method embodiments. The transceiver module 11 is configured to receive second measurement configuration information, where the second measurement configuration information indicates to remove a first measurement object, and the first measurement object is associated with a first measurement identifier; the processing module 12 is further configured to remove the first measurement object; and the processing module 12 is further configured to remove the first measurement identifier when the first measurement identifier is not associated with delay measurement; or the processing module 12 is configured to retain the first measurement identifier when the first measurement identifier is associated with the delay measurement, where the delay measurement includes packet data convergence protocol data packet average delay measurement and/or packet data convergence protocol excess data packet delay measurement.

In another possible implementation, the apparatus 10 may implement the steps or the procedures performed by the terminal device in the method 600 in the foregoing method embodiments. The transceiver module 11 is configured to receive second measurement configuration information, where the second measurement configuration information indicates to remove a first measurement object; the processing module 12 is configured to remove the first measurement object; the processing module 12 is further configured to remove the first measurement object and a first measurement identifier associated with the first measurement object, where the first measurement identifier is associated with delay measurement; and the processing module 12 is further configured to report, by using a first identifier, a measurement result of the delay measurement corresponding to the first measurement identifier, where the first identifier is different from the first measurement identifier, and the delay measurement includes packet data convergence protocol data packet average delay measurement and/or packet data convergence protocol excess data packet delay measurement.

In a second design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform a processing related operation of the network device in the foregoing method embodiments.

In a possible implementation, the apparatus 10 may implement the steps or the procedures performed by the network device in the method 500 in the foregoing method embodiments. The transceiver module 11 is configured to send second measurement configuration information, where the second measurement configuration information indicates to remove a first measurement object, and the first measurement object is associated with a first measurement identifier; and the processing module 12 is configured to remove the first measurement identifier when the first measurement identifier is not associated with delay measurement; or the processing module 12 is configured to retain the first measurement identifier when the first measurement identifier is associated with the delay measurement, where the delay measurement includes packet data convergence protocol data packet average delay measurement and/or packet data convergence protocol excess data packet delay measurement.

In a possible implementation, the processing module 12 is configured to determine that the first measurement object is associated with the delay measurement, and a terminal device does not support performing a second operation in a modification procedure of the first measurement object; and the processing module 12 is further configured to not trigger the modification procedure of the first measurement object before the delay measurement is completed. The second operation includes one or more of the following operations: The terminal device retains a reporting record corresponding to the first measurement identifier, the terminal device keeps timing of a timer corresponding to the first measurement identifier, or the terminal device retains information associated with the first measurement identifier.

In a possible implementation, the apparatus 10 may implement the steps or the procedures performed by the network device in the method 600 in the foregoing method embodiments. The processing module 12 is configured to determine that a first measurement object is associated with delay measurement, and a terminal device does not support retention of a first measurement identifier associated with the first measurement object in a removal procedure of the first measurement object, or reporting a measurement result of the delay measurement by using a first identifier different from the first measurement identifier when the first measurement identifier is deleted, where the first measurement identifier is associated with the delay measurement, and the delay measurement includes packet data convergence protocol data packet average delay measurement and/or packet data convergence protocol excess data packet delay measurement; and the processing module 12 is further configured to not trigger the removal procedure of the first measurement object before the delay measurement is completed.

It should be understood that a specific process in which the modules perform the foregoing corresponding steps is described in detail in the foregoing method embodiments. For brevity, details are not described herein.

It should be understood that the apparatus 10 herein is embodied in a form of a functional module. The term "module" herein may refer to an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in the foregoing solutions has a function of implementing corresponding steps performed by the device (for example, the terminal device or the network device) in the foregoing methods. The function may be implemented by using hardware, or may be implemented by using hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 11 may alternatively be a transceiver circuit (for example, the transceiver circuit may include a receiver circuit and a transmitter circuit), and the processing module may be a processing circuit.

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in a memory 22, to perform the methods in the foregoing method embodiments. Optionally, there are one or more processors 21.

Optionally, as shown in FIG. 7, the apparatus 20 further includes the memory 22. The memory 22 is configured to store the computer program or instructions and/or data. The memory 22 and the processor 21 may be integrated together, or may be disposed separately. Optionally, there are one or more memories 22.

Optionally, as shown in FIG. 7, the apparatus 20 further includes a transceiver 23. The transceiver 23 is configured to receive a signal and/or send a signal. For example, the processor 21 is configured to control the transceiver 23 to receive a signal and/or send a signal.

In a solution, the apparatus 20 is configured to implement operations performed by the terminal device in the foregoing method embodiments.

In another solution, the apparatus 20 is configured to implement operations performed by the network device in the foregoing method embodiments.

It should be understood that the processor in embodiments of this application may be a central processing module (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

FIG. 8 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the terminal device in the foregoing method embodiments. For example, the logic circuit 31 is configured to implement processing related operations performed by the terminal device in the foregoing method embodiments, as shown in FIG. 6 and FIG. 7, and the input/output interface 32 is configured to implement sending and/or receiving related operations performed by the terminal device in the foregoing method embodiments, as shown in FIG. 6 and FIG. 7.

In another solution, the chip system 30 is configured to implement operations performed by the network device in the foregoing method embodiments. For example, the logic circuit 31 is configured to implement processing related operations performed by the network device in the foregoing method embodiments, as shown in FIG. 6 and FIG. 7, and the input/output interface 32 is configured to implement sending and/or receiving related operations performed by the virtualized infrastructure manager in the foregoing method embodiments, as shown in FIG. 6 and FIG. 7.

An embodiment of this application further provides a computer-readable storage medium. The computer-readable storage medium stores computer instructions used to implement the method performed by the device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the device (for example, the terminal device or the network device) in the foregoing method embodiments is implemented.

An embodiment of this application further provides a communication system, including the foregoing terminal device and network device.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first measurement configuration information, wherein the first measurement configuration information indicates to modify a first measurement object, and the first measurement object is associated with a first measurement identifier; and
performing, by the terminal device, a first operation when the first measurement identifier is not associated with delay measurement; or
performing, by the terminal device, a second operation when the first measurement identifier is associated with the delay measurement, wherein
the first operation comprises one or more of the following operations: the terminal device removes a reporting record corresponding to the first measurement identifier, the terminal device stops a timer corresponding to the first measurement identifier, or the terminal device resets information associated with the first measurement identifier;
the second operation comprises one or more of the following operations: the terminal device retains the reporting record corresponding to the first measurement identifier, the terminal device keeps timing of the timer, or the terminal device retains the information associated with the first measurement identifier; and
the delay measurement comprises packet data convergence protocol data packet average delay measurement and/or packet data convergence protocol excess data packet delay measurement.

2. The method according to claim 1, wherein the first measurement identifier is not associated with the delay measurement, and a reporting configuration associated with the first measurement identifier does not comprise configuration information of the packet data convergence protocol data packet average delay measurement and/or configuration information of the packet data convergence protocol excess data packet delay measurement.

3. The method according to claim 1 or 2, wherein the first measurement object is one of second measurement objects, and the method further comprises:
sending, by the terminal device, first capability information, wherein the first capability information indicates that the terminal device supports one or more of the following in a modification procedure of a second measurement object associated with the delay measurement:
supporting retention of a reporting record corresponding to a second measurement identifier, supporting timing keeping of a timer corresponding to the second measurement identifier, or supporting retention of information associated with the second measurement identifier, wherein the second measurement identifier is associated with the second measurement object, and the second measurement identifier is associated with the delay measurement.

4. A communication method, comprising:
obtaining, by a terminal device, a first measurement result of a first cell and a second measurement result of a second cell, wherein the second cell is a serving cell of the terminal device, the second cell and the first cell are different cells, the first cell is associated with a first measurement object, and the second cell is associated with a second measurement object; and
evaluating, by the terminal device, whether the first measurement result and the second measurement result meet a reporting criterion.

5. The method according to claim 4, wherein the method further comprises:
reporting, by the terminal device, a measurement report when the first measurement result and the second measurement result meet the reporting criterion, wherein the measurement report comprises the first measurement result and the second measurement result.

6. The method according to claim 4 or 5, wherein the reporting criterion is associated with the first measurement object.

7. The method according to any one of claims 4 to 6, wherein the first measurement result comprises signal quality of the first cell, the second measurement result comprises signal quality of the second cell, and the reporting criterion comprises one or more of the following:
a difference between the signal quality of the first cell and the signal quality of the second cell is greater than a first threshold; or
the signal quality of the first cell is greater than a second threshold, and the signal quality of the second cell is less than a third threshold.

8. A communication method, comprising:
receiving, by a terminal device, second measurement configuration information, wherein the second measurement configuration information indicates to remove a first measurement object, and the first measurement object is associated with a first measurement identifier;
removing, by the terminal device, the first measurement object; and
removing, by the terminal device, the first measurement identifier when the first measurement identifier is not associated with delay measurement; or
retaining, by the terminal device, the first measurement identifier when the first measurement identifier is associated with the delay measurement, wherein
the delay measurement comprises packet data convergence protocol data packet average delay measurement and/or packet data convergence protocol excess data packet delay measurement.

9. The method according to claim 8, wherein when the first measurement identifier is associated with the delay measurement, the method further comprises: reporting, by the terminal device, a measurement result of the delay measurement associated with the first measurement identifier.

10. The method according to claim 9, wherein when the first measurement identifier is associated with the delay measurement, after the reporting, by the terminal device, a measurement result of the delay measurement associated with the first measurement identifier, the method further comprises:
removing, by the terminal device, the first measurement identifier.

11. The method according to claim 10, wherein the method further comprises:
receiving, by the terminal device, third measurement configuration information, wherein the third measurement configuration information indicates to remove the first measurement identifier.

12. The method according to any one of claims 8 to 11, wherein the first measurement identifier is not associated with the delay measurement, and a reporting configuration associated with the first measurement identifier does not comprise configuration information of the packet data convergence protocol data packet average delay measurement and/or configuration information of the packet data convergence protocol excess data packet delay measurement.

13. The method according to any one of claims 8 to 12, wherein the first measurement object is one of second measurement objects, and the method further comprises:
sending, by the terminal device, second capability information, wherein the second capability information indicates that in a removal procedure of a second measurement object associated with the delay measurement, the terminal device supports retention of a second measurement identifier associated with the second measurement object, and the second measurement identifier is associated with the delay measurement.

14. A communication method, comprising:
receiving, by a terminal device, second measurement configuration information, wherein the second measurement configuration information indicates to remove a first measurement object;
removing, by the terminal device, the first measurement object;
removing, by the terminal device, the first measurement object and a first measurement identifier associated with the first measurement object, wherein the first measurement identifier is associated with delay measurement; and
reporting, by the terminal device by using a first identifier, a measurement result of the delay measurement corresponding to the first measurement identifier, wherein the first identifier is different from the first measurement identifier, and the delay measurement comprises packet data convergence protocol data packet average delay measurement and/or packet data convergence protocol excess data packet delay measurement.

15. The method according to claim 14, wherein the first measurement identifier is associated with the delay measurement, and a reporting configuration associated with the first measurement identifier comprises configuration information of the packet data convergence protocol data packet average delay measurement and/or configuration information of the packet data convergence protocol excess data packet delay measurement.

16. The method according to claim 14 or 15, wherein the reporting, by the terminal device by using a first identifier, a measurement result of the delay measurement corresponding to the first measurement identifier comprises:
reporting, by the terminal device, the measurement result based on the reporting configuration corresponding to the first measurement identifier; or
reporting, by the terminal device, the measurement result based on a preconfigured reporting configuration.

17. The method according to any one of claims 14 to 16, wherein the first measurement object is one of second measurement objects, and the method further comprises:
sending, by the terminal device, third capability information, wherein the third capability information indicates that in a deletion procedure of a second measurement object associated with the delay measurement, the terminal device supports using the first identifier to report the measurement result of the delay measurement.

18. A communication method, comprising:
sending, by a network device, second measurement configuration information, wherein the second measurement configuration information indicates to remove a first measurement object, and the first measurement object is associated with the first measurement identifier; and
removing, by the network device, the first measurement identifier when the first measurement identifier is not associated with delay measurement; or
retaining, by the network device, the first measurement identifier when the first measurement identifier is associated with the delay measurement, wherein
the delay measurement comprises packet data convergence protocol data packet average delay measurement and/or packet data convergence protocol excess data packet delay measurement.

19. The method according to claim 18, wherein when the first measurement identifier is associated with the delay measurement, the method further comprises:
receiving, by the network device, a measurement result of the delay measurement from the terminal device, wherein the measurement result is associated with the first measurement identifier.

20. The method according to claim 19, wherein when the first measurement identifier is associated with the delay measurement, after the receiving, by the network device, a measurement result corresponding to the delay measurement from the terminal device, the method further comprises:
removing, by the network device, the first measurement identifier.

21. The method according to claim 19 or 20, wherein after the receiving, by the network device, a measurement result corresponding to the delay measurement from the terminal device, the method further comprises:
sending, by the network device, third measurement configuration information, wherein the third measurement configuration information indicates to remove the first measurement identifier.

22. The method according to any one of claims 18 to 21, wherein the first measurement identifier is not associated with the delay measurement, and a reporting configuration associated with the first measurement identifier does not comprise configuration information of the packet data convergence protocol data packet average delay measurement and/or configuration information of the packet data convergence protocol excess data packet delay measurement.

23. The method according to any one of claims 18 to 22, wherein the first measurement object is one of second measurement objects, and the method further comprises:
receiving, by the network device, second capability information, wherein the second capability information indicates that in a removal procedure of a second measurement object associated with the delay measurement, the terminal device supports retention of a second measurement identifier associated with the second measurement object, and the second measurement identifier is associated with the delay measurement.

24. A communication method, comprising:
sending, by a network device, first measurement configuration information, wherein the first measurement configuration information indicates to modify a first measurement object, and the first measurement object is associated with the first measurement identifier; and
receiving, by the network device, a measurement result from a terminal device when the first measurement identifier is not associated with delay measurement, wherein the measurement result is reported by the terminal device based on a first operation; or
receiving, by the network device, a measurement result from the terminal device when the first measurement identifier is associated with the delay measurement, wherein the measurement result is reported by the terminal device based on a second operation, wherein
the first operation comprises one or more of the following operations: the terminal device removes a reporting record corresponding to the first measurement identifier, the terminal device stops a timer corresponding to the first measurement identifier, or the terminal device resets information associated with the first measurement identifier;
the second operation comprises one or more of the following operations: the terminal device retains the reporting record corresponding to the first measurement identifier, the terminal device keeps timing of the timer, or the terminal device retains the information associated with the first measurement identifier; and
the delay measurement comprises packet data convergence protocol data packet average delay measurement and/or packet data convergence protocol excess data packet delay measurement.

25. The method according to claim 24, wherein the first measurement identifier is not associated with the delay measurement, and a reporting configuration associated with the first measurement identifier does not comprise configuration information of the packet data convergence protocol data packet average delay measurement and/or configuration information of the packet data convergence protocol excess data packet delay measurement.

26. The method according to claim 24 or 25, wherein the first measurement object is one of second measurement objects, and the method further comprises:
receiving, by the network device, first capability information, wherein the first capability information indicates that the network device supports one or more of the following in a modification procedure of a second measurement object associated with the delay measurement:
supporting retention of a reporting record corresponding to a second measurement identifier, supporting timing keeping of a timer corresponding to the second measurement identifier, or supporting retention of information associated with the second measurement identifier, wherein the second measurement identifier is associated with the second measurement object, and the second measurement identifier is associated with the delay measurement.

27. A communication apparatus, wherein the apparatus comprises one or more functional modules, and the one or more functional modules are configured to perform the method according to any one of claims 1 to 3, or configured to perform the method according to any one of claims 4 to 7, or configured to perform the method according to any one of claims 8 to 13, or configured to perform the method according to any one of claims 14 to 17, or configured to perform the method according to any one of claims 18 to 23, or configured to perform the method according to any one of claims 24 to 26.

28. A communication apparatus, comprising:
a processor, configured to execute a computer program stored in a memory, to enable the apparatus to perform the method according to any one of claims 1 to 3, or to enable the apparatus to perform the method according to any one of claims 4 to 7, or to enable the apparatus to perform the method according to any one of claims 8 to 13, or to enable the apparatus to perform the method according to any one of claims 14 to 17, or to enable the apparatus to perform the method according to any one of claims 18 to 23, or to enable the apparatus to perform the method according to any one of claims 24 to 26.

29. A computer program product, wherein the computer program product comprises instructions used to perform the method according to any one of claims 1 to 3, or the computer program product comprises instructions used to perform the method according to any one of claims 4 to 7, or the computer program product comprises instructions used to perform the method according to any one of claims 8 to 13, or the computer program product comprises instructions used to perform the method according to any one of claims 14 to 17, or the computer program product comprises instructions used to perform the method according to any one of claims 18 to 23, or the computer program product comprises instructions used to perform the method according to any one of claims 24 to 26.

30. A computer-readable storage medium, wherein the computer-readable storage medium stores a computer program, and when the computer program is run on a computer, the computer is enabled to perform the method according to any one of claims 1 to 3, or the computer is enabled to perform the method according to any one of claims 4 to 7, or the computer is enabled to perform the method according to any one of claims 8 to 13, or the computer is enabled to perform the method according to any one of claims 14 to 17, or the computer is enabled to perform the method according to any one of claims 18 to 23, or the computer is enabled to perform the method according to any one of claims 24 to 26.

31. A chip apparatus, comprising a processing circuit, wherein the processing circuit is configured to invoke a program from a memory and run the program, to enable a communication device on which the chip apparatus is installed to perform the method according to any one of claims 1 to 3, claims 4 to 7, claims 8 to 13, or claims 14 to 17, or perform the method according to any one of claims 18 to 23 or claims 24 to 26.
